(19) **Europäisches Patentamt**
**European Patent Office**
**Office européen des brevets**

(11) **EP 2 263 275 B1**

(12) **EUROPEAN PATENT SPECIFICATION**

(45) Date of publication and mention
of the grant of the patent:
**26.04.2017 Bulletin 2017/17**

(21) Application number: **09717484.1**

(22) Date of filing: **24.02.2009**

(51) Int Cl.:
*B01D 67/00* (2006.01)     *B01D 71/26* (2006.01)
*H01M 2/14* (2006.01)     *H01M 2/16* (2006.01)
*H01M 10/0525* (2010.01)     *H01M 10/24* (2006.01)
*H01M 10/30* (2006.01)     *H01M 10/32* (2006.01)
*H01M 10/34* (2006.01)

(86) International application number:
**PCT/JP2009/053794**

(87) International publication number:
**WO 2009/110396 (11.09.2009 Gazette 2009/37)**

(54) **MICROPOROUS MEMBRANE, BATTERY SEPARATOR AND BATTERY**

MIKROPORÖSE MEMBRAN, BATTERIESEPARATOR UND BATTERIE

MEMBRANE MICROPOREUSE, SÉPARATEUR DE BATTERIE ET BATTERIE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **07.03.2008 US 44702**

(43) Date of publication of application:
**22.12.2010 Bulletin 2010/51**

(73) Proprietor: **Toray Battery Separator Film Co., Ltd. Tochigi (JP)**

(72) Inventors:
• **TAKITA, Kotaro**
**Nasushiobara-shi**
**Tochigi 329-2735 (JP)**
• **KIMISHIMA, Kohtaro**
**Yokohama-shi**
**Kanagawa 235-0022 (JP)**

• **KAIMAI, Norimitsu**
**Yokohama-shi**
**Kanagawa 230-0074 (JP)**

(74) Representative: **Webster, Jeremy Mark**
**Mewburn Ellis LLP**
**City Tower**
**40 Basinghall Street**
**London EC2V 5DE (GB)**

(56) References cited:
**WO-A1-2008/016174     GB-A- 2 070 847**
**GB-A- 2 298 817     JP-A- 2000 086 790**
**JP-A- 2001 172 420     JP-A- 2001 192 487**
**JP-A- 2003 003 006     JP-A- 2007 335 242**
**JP-A- 2008 280 508**

**Description**

**FIELD OF THE INVENTION**

The present invention relates to a method for manufacturing a microporous membrane having standard deviation of permeability of 20 seconds or less across the membrane in the transverse direction ("TD"), and a puncture strength of 3,000 mN or more, normalized to a membrane thickness of 16 $\mu$m. The microporous membrane can be used as a battery separator. The microporous membrane also has good heat-shrinkage and compression resistance properties. The invention also relates to a method for manufacturing a microporous membrane, to battery separators comprising such a microporous membrane, to batteries utilizing such battery separators, and to the use of such a battery as a source or sink of electric charge.

**BACKGROUND OF THE INVENTION**

Microporous membranes are useful as separators for primary batteries and secondary batteries such as lithium ion secondary batteries, lithium-polymer secondary batteries, nickel-hydrogen secondary batteries, nickel-cadmium secondary batteries, nickel-zinc secondary batteries, silver-zinc secondary batteries, etc. When the microporous membrane is used as a battery separator, particularly for lithium ion batteries, the membrane's performance significantly affects the battery's properties, productivity, and safety. Accordingly, the microporous membrane should have appropriate permeability, mechanical properties, heat resistance, dimensional stability, shut down properties, melt down properties, etc. It is desirable for such batteries to have a relatively low shutdown temperature and a relatively high meltdown temperature for improved battery safety properties, particularly for batteries exposed to high temperatures under operating conditions. High separator permeability is desirable for high capacity batteries. A separator with high mechanical strength is desirable for improved battery assembly and fabrication. A uniformly high permeability distribution across the separator surface is an important physical property. The permeability uniformity of a microporous membrane can be characterized by a distribution of air permeability values at two or more points along a line parallel to TD. A relatively high air permeability can be characterized by a relatively small standard deviation among the measured air permeability values. Air permeability is frequently expressed in terms of a "Gurley" value equal to the number of seconds needed to pass $100 cm^3$ of air through 1.0 square inch of material at standard pressure. The Gurley value is conventionally expressed as a number of seconds per $100 cm^3$ or as a number of seconds (the "per $100 cm^3$" being understood). When the air permeability is relatively uniform, e.g., when it has approximately the same value at different points along TD, less trimming of the membrane is needed to produce a membrane having appropriate permeability specifications, which results in less waste and an increase in membrane production line yield.

The optimization of material compositions, stretching conditions, heat treatment conditions, etc., has been proposed to improve the properties of microporous membranes used as battery separators. For example, JP6-240036A discloses a microporous polyolefin membrane having improved pore diameter and a sharp pore diameter distribution. The membrane is made from a polyethylene resin containing 1% or more by mass of ultra-high molecular weight polyethylene having a weight average molecular weight ("Mw") of $7 \times 10^5$ or more, the polyethylene resin having a molecular weight distribution (weight-average molecular weight/number-average molecular weight) of 10 to 300, and the microporous polyolefin membrane having a porosity of 35 to 95%, an average penetrating pore diameter of 0.05 to 0.2 $\mu$m, a rupture strength (15 mm width) of 0.2 kg or more, and a pore diameter distribution (maximum pore diameter/average penetrating pore diameter) of 1.5 or less. This microporous membrane is produced by extruding a melt-blend of the above polyethylene resin and a membrane-forming solvent through a die, stretching the gel-like sheet obtained by cooling at a temperature from the crystal dispersion temperature ("Tcd") of the above polyethylene resin to the melting point +10°C, removing the membrane-forming solvent from the gel-like sheet, re-stretching the resultant membrane to 1.5 to 3 fold as an area magnification at a temperature of the melting point of the above polyethylene resin -10°C or less, and heat-setting it in a single stage at a temperature from the crystal dispersion temperature of the above polyethylene resin to the melting point.

WO 1999/48959 discloses a microporous polyolefin membrane having suitable strength and permeability, as well as a uniformly porous surface without local permeability variations. The membrane is made of a polyolefin resin, for instance, high density polyethylene, having an Mw of 50,000 or more and less than 5,000,000, and a molecular weight distribution of 1 or more to less than 30, which has a network structure with fine gaps formed by uniformly dispersed micro-fibrils, having an average micro-fibril size of 20 to 100 nm and an average micro-fibril distance of 40 to 400 nm. This microporous membrane is produced by extruding a melt-blend of the above polyolefin resin and a membrane-forming solvent through a die, stretching a gel-like sheet obtained by cooling at a temperature of the melting point of the above polyolefin resin -50°C or higher and lower than the melting point, removing the membrane-forming solvent from the gel-like sheet, re-stretching it to 1.1 to 5 fold at a temperature of the melting point of the above polyolefin resin -50°C or higher and lower than the melting point, and heat-setting it in a single stage at a temperature from the crystal dispersion temperature of the above polyolefin resin to the melting point.

WO 2000/20492 discloses a microporous polyolefin membrane of improved permeability which is characterized by fine polyethylene fibrils having an Mw of $5 \times 10^5$ or more, the composition comprising polyethylene. The microporous polyolefin membrane has an average pore diameter of 0.05 to 5 $\mu$m, and the percentage of lamellas at angles $\theta$ of 80 to 100° relative to the membrane surface is 40% or more in longitudinal and transverse cross sections. This polyethylene composition comprises 1 to 69% by weight of ultra-high molecular weight polyethylene having a weight average molecular weight of $7 \times 10^5$ or more, 1 to 98% by weight of high density polyethylene and 1 to 30% by weight of low density polyethylene. This microporous membrane is produced by extruding a melt-blend of the above polyethylene composition and a membrane-forming solvent through a die, stretching a gel-like sheet obtained by cooling, heat-setting it in a single stage at a temperature from the crystal dispersion temperature of the above polyethylene or its composition to the melting point +30°C, and removing the membrane-forming solvent.

WO 2002/072248 discloses a microporous membrane having improved permeability, particle-blocking properties and strength. The membrane is made using a polyethylene resin having an Mw of less than 380,000. The membrane has a porosity of 50 to 95% and an average pore diameter of 0.01 to 1 $\mu$m. This microporous membrane has a three-dimensional network skeleton formed by micro-fibrils having an average diameter of 0.2 to 1 $\mu$m connected to each other throughout the overall microporous membrane, and openings defined by the skeleton to have an average diameter of 0.1 $\mu$m or more and less than 3 $\mu$m. This microporous membrane is produced by extruding a melt-blend of the above polyethylene resin and a membrane-forming solvent through a die, removing the membrane-forming solvent from the gel-like sheet obtained by cooling, stretching it to 2 to 4 fold at a temperature of 20 to 140°C, and heat-treating the stretched membrane it in a single stage at a temperature of 80 to 140°C.

WO 2005/113657 discloses a microporous polyolefin membrane having suitable shutdown properties, meltdown properties, dimensional stability, and high-temperature strength. The membrane is made using a polyolefin composition comprising (a) polyethylene resin containing 8 to 60% by mass of a component having a molecular weight of 10,000 or less, and an Mw/Mn ratio of 11 to 100, wherein Mn is the number-average molecular weight of the polyethylene resin, and a viscosity-average molecular weight ("Mv") of 100,000 to 1,000,000, and (b) polypropylene. The membrane has a porosity of 20 to 95%, and a heat shrinkage ratio of 10% or less at 100°C. This microporous polyolefin membrane is produced by extruding a melt-blend of the above polyolefin and a membrane-forming solvent through a die, stretching the gel-like sheet obtained by cooling, removing the membrane-forming solvent, and annealing the sheet.

GB 2298817 discloses a porous film of a laminate structure, having a porous inner layer comprising polyethylene and having formed on both surfaces thereof a porous outer layer comprising polypropylene and having a Vickers hardness of 10 or more. The film is produced by forming a laminate film having an inner film comprising a polyethylene as the essential component, and two outer layers each comprising a polypropylene layer, each outer layer being formed on both surfaces of the inner layer, stretching the laminate film to make the inner layer and the outer layers porous, and then heat-treating the laminate film to increase the Vickers hardness of the outer layers to 10 or more. GB 2070847 discloses a microporous membrane having deposited on at least one surface thereof a porous, uniform coating of a low hydrogen over-potential material. The membrane is said to be particularly suited for use as a battery separator in a rechargeable zinc electrode containing battery, which is resistant to penetration by zinc dendrites and is capable of increasing the uniformity of current density upon recharging of the battery. The membrane is produced by taking a precursor film and subjecting it to either a "dry stretch" method as described in US 3801404 or a "solvent stretch" method as defined in US 3839516. The dry stretch method involves (1) cold stretching an elastic film until porous surface regions or areas which are elongated normal or perpendicular to the stretch direction are formed, (2) hot stretching the cold stretched film until fibrils and pores or open cells which are elongated parallel to the stretch direction are formed, and then (3) heating or heat-setting the resulting porous film under tension. The solvent stretch method involves (1) contacting a precursor film having at least two components, one of which is lesser in volume than all the other components, with a swelling agent for sufficient time to permit adsorption of the swelling agent into the film, (2) stretching the film in at least one direction while in contact with the swelling agent, (3) maintaining the film in its stretched state during removal of the swelling agent and (4) optionally, stabilising the film by heat setting under tension.

WO 2008/016174 discloses a multi-layer microporous polyolefin membrane comprising a first microporous layer containing 7% or less by mass of ultra-high-molecular-weight polyethylene having a weight-average molecular weight of $1 \times 10^6$ or more, and having a structure in which a pore size distribution curve obtained by mercury intrusion porosimetry has at least two peaks, and a second microporous layer containing 8% or more by mass of the ultra-high-molecular-weight polyethylene. The membrane may be produced in a method comprising the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) extruding (preferably simultaneously) the first and second polyolefin solution through at least one die to form an extrudate, (4) cooling the extrudate to form a multi-layer, gel-like sheet, (5) removing the membrane-forming solvent from the multi-layer, gel-like gel-like sheet to form a solvent-removed gel-like sheet, and (6) drying the solvent-removed gel-like sheet in order to form the multi-layer, microporous polyolefin membrane. An optional stretching step (7), and an optional hot solvent treatment step (8), etc. can be conducted between steps (4) and (5), if desired. After step (6), an optional step (9) of stretching a multi-layer, microporous membrane, an optional heat treatment step (10), an optional cross-linking step with ionizing radiations (11), and an optional hydrophilic treatment step (12), etc., can be conducted if desired.

With respect to the properties of separators, not only permeability, mechanical strength, shut down properties and melt down properties, but also properties related to heat shrinkage, have recently been given importance. Especially important to battery manufacturers is that the separators have low heat shrinkage, while maintaining high permeability and heat resistance. In particular, electrodes for lithium ion batteries expand and shrink according to the intrusion and departure of lithium, and an increase in battery capacity leads to larger expansion ratios. Because separators are compressed when the electrodes expand, it is desired that the separators when compressed suffer as little a decrease as possible in electrolytic solution retention.

Moreover, even though improved microporous membranes are disclosed in JP6-240036A, WO 1999/48959, WO 2000/20492, WO 2002/072248, WO 2005/113657 and JP 2003-003006A further improvements are still needed, particularly membranes having low heat shrinkage, good porosity and uniformly high permeability distribution across the membrane, while maintaining high strength and heat resistance. It is thus desired to form battery separators from such microporous membranes.

## SUMMARY OF THE INVENTION

In an embodiment, the invention relates to a method for producing a microporous membrane comprising polyolefin, the membrane having a relatively high strength and a relatively uniform air permeability, comprising heat-setting the microporous polymeric membrane in at least an upstream stage (e.g., a first stage) and a downstream stage (e.g., a final stage), the first stage being upstream of the final stage and the temperature of the first stage being at least 15°C cooler than the temperature of the final stage. The invention also relates to the membrane made by such a method. When the polymeric membrane comprises polyethylene, the temperature of the first stage should be, e.g., no more than 10°C warmer than the polyethylene's crystal dispersion temperature. In an embodiment, the edges of the microporous polymeric membrane are gripped during heat-setting to regulate the change in the width of the membrane during the heat setting step. The membrane's width can be held constant or decreased during heat-setting, e.g., by adjusting pairs of tenter clips to reduce the width of the membrane. Therefore, in one embodiment, the invention relates to heat setting a microporous polymeric membrane in at least an upstream (or first stage) and a downstream (or final stage), the first stage being upstream of the final stage and the temperature of the first stage being at least 15°C cooler than the temperature of the final stage, and wherein the microporous polymeric membrane has a first (or initial) size in at least one planar direction (e.g., TD) before heat setting and a second (or final) size after heat setting in the planar direction, the final size being in the range of from 80% to 95% of the initial size. Of particular importance when used as a battery separator, the microporous membrane exhibits excellent heat shrinkage, melt down temperature and thermo-mechanical properties, i.e. low maximum shrinkage in the molten state.

In an embodiment, the microporous polymeric membrane is produced by steps comprising (1) combining a polyolefin composition and at least one diluent or solvent, for example a membrane-forming solvent, to form a polyolefin solution, the polyolefin composition comprising (a) from about 50 to about 100% of a first polyethylene resin having a weight average molecular weight ("Mw") < $1 \times 10^6$, e.g., in the range of $4.5 \times 10^5$ to $6.5 \times 10^5$ or from about $2.5 \times 10^5$ to about $9 \times 10^5$ and a molecular weight distribution (MWD; defined as Mw/Mn) of from about 3 to about 100, (b) from about 0 to about 40% of a second polyethylene resin having an Mw $\geq 1 \times 10^6$, e.g., in the range of from $1 \times 10^6$ to about $5 \times 10^6$ and an MWD in the range of from about 3 to about 100, and (c) from about 0 to about 50% of a polypropylene resin having an Mw $\geq 5 \times 10^5$, an MWD of from about 1 to about 100 and a heat of fusion of 90 J/g or higher, percentages based on the mass of the polyolefin composition, (2) extruding the polyolefin solution through a die to form an extrudate, (3) cooling the extrudate to form a cooled extrudate having a high polyolefin content, (4) stretching the cooled extrudate in at least one direction at a stretching temperature of from about Tcd °C of the combined polyethylene of the cooled extrudate to about Tm °C to form a stretched sheet, (5) removing at least a portion of the diluent or solvent from the stretched sheet to form a membrane, (6) heat-setting the membrane product of step (5) to form the microporous membrane, said heat-setting being conducted in at least two stages wherein at least one earlier heat-setting stage is conducted at a temperature different from and lower than that of one or more of the later stages and the temperature difference between the first stage and the last stage is 15°C or higher.

In an embodiment, the invention relates to a microporous membrane comprising polyolefin, the membrane having:

(a) a machine direction in the plane of the membrane and a thickness direction perpendicular to both the plane of the membrane and the machine direction;
(b) a width W in a transverse direction perpendicular to both the thickness direction and the machine direction, the value of W being determined before membrane slitting;
(c) a plurality of air permeability values in the thickness direction at points along the transverse direction from an initial point to a final point, the standard deviation of the air permeability values being no more than 20 seconds,

(i) the initial and final points being equidistant along the transverse direction from a point W/2, and
(ii) the distance between the initial and final points measured along the transverse direction being at least 75% of W; and at least one of

(d) a puncture strength of $\geq$ 3,000mN normalized to a thickness of 16 $\mu$m;
(e) a TD heat shrinkage at 105°C of 10% or less;
(f) a TD heat shrinkage ratio at 130°C of 20% or less; or
(g) a TMA shrinkage in the molten state at about 140°C of 20% or less.

In a related embodiment, the microporous membrane has at least one of a TD shrinkage ratio at 105°C of 5% or less; a TD heat shrinkage ratio at 130°C of 15% or less; or a TMA shrinkage in the molten state at about 140°C of 10% or less. The microporous membrane can be a polymeric membrane, which polymeric membrane comprises polyethylene, polypropylene, or both. For example, the membrane can comprise (a) from about 50 to about 100% of a first polyethylene having an Mw of from about $2.5 \times 10^5$ to about $9 \times 10^5$ and an MWD of from about 3.5 to about 20, (b) from about 0 to about 40% of a second polyethylene having an Mw of from about $1.1 \times 10^6$ to about $5 \times 10^6$ and an MWD of from about 3.5 to about 20, and (c) from about 0 to about 50% of a polypropylene having an Mw $\geq 5 \times 10^5$, an MWD of from about 1 to about 100 and a heat of fusion of 90 J/g or higher, percentages based on the mass of the membrane.

The microporous membrane of the invention can be a microporous polymeric membrane. The term "polymeric" in this sense means "contains one or more polymer". In addition to polymer, polymeric membranes can optionally contain other components, e.g., organic and/or inorganic materials such as a filler material. When the microporous polymeric membrane contains polyolefin, and optionally other components, it can be referred to as a polyolefin membrane. The term polymer is used here in the broad sense, and includes, e.g., oligomers, polymers, copolymers, and the like, e.g., any product of a polymerization reaction, and is inclusive of homopolymers, copolymers, terpolymers, etc. The term "copolymer(s)" refers to polymers formed by the polymerization of at least two different monomers. For example, the term "copolymer" includes the copolymerization reaction product of ethylene and an alpha-olefin ($\alpha$-olefin), such as by way of example only propylene or 1-hexene. However, the term "copolymer" is also inclusive of, for example, the copolymerization of a mixture of ethylene, propylene, hexene, and 1-octene.

Microporous membranes that benefit from the staged heat-setting step of the invention include microporous membranes produced by a "wet" manufacturing process, which uses in addition to polymer (and optionally other components) a diluent or solvent to assist in imparting porosity to the membrane. But the invention is not limited to such membranes. For example, the staged heat-setting step of the invention is also applicable to microporous membranes produced in a "dry" process, e.g., a process using polymer and optionally other materials, but without a significant amount of diluent or solvent.

When the microporous membrane to be subjected to the staged heat treatment step of the invention is produced in a wet process from and extrudate of a polyolefin solution containing polyolefin and diluent, the resins used in forming the polyolefin solution can comprise, for example, (a) from about 50 to about 100%, for example from about 50 to about 80%, of a first polyethylene resin having an Mw of from about $2.5 \times 10^5$ to about $9 \times 10^5$, for example from about $4.5 \times 10^5$ to about $6.5 \times 10^5$, and an MWD of from about 3.5 to about 20, for example from about 4 to about 10, (b) from about 0 to about 40%, for example from about 10 to about 30%, of a second polyethylene resin having an Mw of from about $1.1 \times 10^6$ to about $5 \times 10^6$, for example from about $1.5 \times 10^6$ to about $3 \times 10^6$, and an MWD of from about 3 to about 100, for example from about 3.5 to about 20, and (c) from about 0 to about 50%, for example from about 0 to about 40% such as from about 1% to about 35%, of a polypropylene resin having an Mw $\geq 5 \times 10^5$, for example from about $8 \times 10^5$ to about $1.5 \times 10^6$, an MWD of from about 1 to about 100, for example from about 2 to about 50, and a heat of fusion of 90 J/g or higher, for example from about 100 to about 120 J/g. The microporous membrane may suitably comprise 50% or less by mass of polypropylene obtained from polypropylene resin (e.g., in the range of 0% to 45% or 5% to 45%) and 50% by mass or more of polyethylene obtained from polyethylene resins (e.g., 55% to 100% or 55% to 95%), based on the mass of the microporous membrane.

## DETAILED DESCRIPTION OF THE INVENTION

It is observed for polymeric membranes that heat setting at a relatively high temperature is needed to produce a microporous membrane of relatively high air permeability and relatively high puncture strength. For example, for microporous polymeric membranes containing polyethylene, it is observed that a heat setting temperature in the range of about 90°C to about 127°C is needed to produce a microporous polymeric membrane having an air permeability $\leq$

400 seconds/100 cm$^3$ normalized to a membrane thickness of 16μm (Gurley value) and a pin puncture strength ≥ 3,000 mN normalized to a membrane thickness of 16μm, with relatively longer times needed at lower heat set temperature.

As a practical matter, given the diminished production line yield, relatively low heat-set temperatures for long heat-set times are considered undesirable. It is also observed, that a relatively low heat set temperature results in a microporous membrane of relatively low pin puncture strength. While increasing heat-set temperature results in improved yield and improved pin puncture strength, it is also observed to result in a degradation in air permeability uniformity, particularly near the edges of the microporous membrane. In particular, it is observed that using a relatively high heat-set temperature (e.g., approximately 127°C for microporous membranes containing polyethylene) results in a membrane having significantly degraded standard deviation of Gurley values as measured at points along the membrane's transverse direction ("TD") from one edge of the film to the other, compared to the standard deviation of Gurley values before heat-setting.

While not wishing to be bound by any theory or model, it is believed that the degradation of standard deviation of Gurley values results from the presence of non-uniform residual strain in the microporous film, particularly in TD, before the heat-setting step. For microporous membrane produced by a wet process, the residual strain potentially results from, e.g., non-miform shear on the polyolefin solution as it transits the die during extrusion, non-uniform strain distribution during the wet orientation step (e.g., when tenter clips attached to a pantograph grip the edges of the membrane), non-uniform thermal distribution (e.g., hot spots) during stretching and/or drying. For microporous membrane made by a dry process, such residual strain can result from non-uniformity of the die shape during sheet forming.

The invention is based in part on the discovery that heat-setting a microporous membrane in at least two stages, with the initial (upstream) stage operating at least 15°C cooler than the temperature of the final (downstream) can provide a significant improvement in the membrane's pin puncture strength, air permeability, and air permeability uniformity (standard deviation of measured air permeability values (i.e., the Gurley values) at points along TD).

The staged heat-setting of the invention is applicable not only to microporous membranes produced by a wet process, but also to those produced by a dry process. In an embodiment, the microporous membrane is a monolayer membrane. The choice of production method is not critical, and any method capable of forming a microporous membrane from polymeric starting materials can be used, including conventional methods such as those such as those described in U.S. patent No. 5,051,183 and in U.S. Patent No. 6,096,213. In another embodiment, the microporous membrane is multi-layer membrane, i.e., one having at least two layers. For the sake of brevity, the production of the microporous membrane will be mainly described in terms of a monolayer microporous polymeric membrane produced by a wet process although those skilled in the art will recognize that the same staged heat-setting techniques can be applied to the production of membranes or membranes having two or more layers.

**[1] Materials used to produce the microporous membrane**

(1) Polyolefin Composition

In an embodiment, the invention relates to a method for making a microporous polymeric membrane film having a good balance of important properties, including excellent porosity, low heat shrinkage and uniformly high permeability distribution across the membrane, while maintaining high permeability and heat resistance, with good mechanical strength and compression resistance. The microporous polymeric membrane is produced from one or more polymeric resins and a diluent or solvent. When more than one polymeric resin is used, e.g., more than one polyolefin (e.g., polyethylene) resin, the resins can be combined, e.g., by melt-blending, dry-mixing, etc. to form a polymeric (e.g., polyolefin) composition.

The polyolefin composition can comprise, for example, (a) from about 50 to about 100% of a first polyethylene resin having an Mw < 1 x 10$^6$, e.g., in the range of from about 2.5 x 10$^5$ to about 9 x 10$^5$ and an MWD of from about 3 to about 100, (b) from about 0 to about 40 of a second polyethylene resin having an Mw ≥ 1 x 10$^6$, e.g., in the range of from about 1.1 x 10$^6$ to about 5 x 10$^6$ and an MWD of from about 3 to about 100, and (c) from about 0 to about 50% of a polypropylene resin having an Mw ≥ 5 x 10$^5$, an MWD of from about 1 to about 100 and a heat of fusion of 90 J/g or higher, percentages based on the mass of the polyolefin composition.

The molecular weight distribution of the polymeric composition can be, e.g., within the relatively narrow range of from about 2.5 to about 7.

The polyolefin resins will now be described in more detail.

(a) Polyethylene resins

In an embodiment, the microporous polyolefin membrane is produced from at least one polyethylene resin, i.e., the first polyethylene resin.

*(i) Composition*

The first polyethylene resin has an Mw < $1 \times 10^6$, e.g., in the range of from about $2.5 \times 10^5$ to about $9 \times 10^5$ and an MWD of from about 3 to about 100. A non-limiting example of the first polyethylene resin for use herein is one that has an Mw of from about $2.5 \times 10^5$ to about $9 \times 10^5$, for example about $4.5 \times 10^5$ to $6.5 \times 10^5$, and an MWD of from about 3.5 to about 20, such as from about 4 to about 10. The first polyethylene resin can be an ethylene homopolymer, or an ethylene/$\alpha$-olefin copolymer of ethylene and $\leq$ 5 mole % of a comonomer selected from propylene, butene-1, pentene-1, hexene-1, 4-methylpentene-1, octene-1, vinyl acetate, methyl methacrylate, or styrene or combinations thereof Such copolymer is preferably produced using a single-site catalyst. Although it is not critical, the first polyethylene can have terminal unsaturation of, e.g., two or more per 10,000 carbon atoms in the polyethylene. Terminal unsaturation can be measured by, e.g., conventional infrared spectroscopic methods.

The second polyethylene resin, when present, can be for example an ultra-high molecular weight polyethylene (UHMWPE) resin, has an Mw $\geq$ $1 \times 10^6$, e.g., in the range of from about $1.1 \times 10^6$ to about $5 \times 10^6$ and an MWD of from about 3 to about 100. Anon-limiting example of the second polyethylene resin for use herein is one that has an Mw in the range of from about $1.5 \times 10^6$ to about $3 \times 10^6$, for example about $2 \times 10^6$, and an MWD of from about 3.5 to about 20. The second polyethylene resin can be an ethylene homopolymer, or a copolymer of ethylene and $\leq$ 5 mole % of a comonomer selected from propylene, butene-1, pentene-1, hexene-1, 4-methylpentene-1, octene-1, vinyl acetate, methyl methacrylate, or styrene or combinations thereof Such copolymer is preferably produced using a single-site catalyst.

*(ii) Polyethylene Molecular weight distribution*

The MWD of the overall polyethylene composition for use herein is preferably from about 2 to about 300, for example from about 5 to about 50. When the MWD is more than 100, the percentage of a lower molecular weight component is too high, resulting in decrease in the strength of the resulting microporous membrane. The MWD of polyethylene (homopolymer or an ethylene/$\alpha$-olefin copolymer) can be properly controlled by a multi-stage polymerization. The multi-stage polymerization method is preferably a two-stage polymerization method comprising forming a high molecular weight polymer component in the first stage, and forming a low molecular weight polymer component in the second stage. In the polyethylene composition for use herein, the larger the MWD, the larger difference in Mw exists between higher molecular weight polyethylene and lower molecular weight polyethylene, and vice versa. The MWD of the polyethylene composition can be properly controlled by the molecular weights and mixing ratios of components.

(b) Polypropylene resin

While not required, the microporous polyolefin membrane can be produced from polyethylene and polypropylene.

*(i) Composition*

The polypropylene resin for use herein has an Mw $\geq$ $5 \times 10^5$, for example from about $8 \times 10^5$ to about $1.5 \times 10^6$, a heat of fusion of 90 J/g or higher, for non-limiting example from about 100 to about 120 J/g, and a molecular weight distribution of from about 1 to about 100, for example from about 2 to about 50 or from about 2 to about 6. The polypropylene can be a propylene homopolymer or a copolymer (random or block) of propylene and < 10 mole % of a comonomer selected from ethylene, butene-1, pentene-1, hexene-1, 4-methylpentene-1, octene-1, vinyl acetate, methyl methacrylate, styrene, etc., and diolefins such as butadiene, 1,5-hexadiene, 1,7-octadiene, 1,9-decadiene, etc.

The amount of polypropylene resin in the polyolefin composition is 50% or less by mass based on 100% of the mass of the polyolefin composition. When the percentage of polypropylene is more than 50% by mass, the resultant microporous membrane has relatively lower strength. The percentage of polypropylene resin may be from about 0 to about 50% by mass, for example from about 0 to about 40%, e.g., about 30%, of the polyolefin composition.

In an embodiment, the polypropylene resin has an Mw of from about $0.8 \times 10^6$ to about $1.5 \times 10^6$, for example from about $0.9 \times 10^6$ to about $1.4 \times 10^6$, an MWD of from about 1 to about 100, for example from about 2 to about 50, and a heat of fusion of about 80 J/g or higher, for example from about 90 to about 120 J/g. Optionally, the polypropylene has one or more of the following properties: (i) the polypropylene is isotactic; (ii) a heat of fusion of the polymeric composition is greater than about 108 J/g, or more than about 110 J/g, or more than about 112 J/g (the heat of fusion for the polymeric composition can be determined by conventional methods, e.g., Differential Scanning Calorimetry (DSC)); (iii) a melting peak (second melt) of at least about 160°C; (iv) the polypropylene has a Trouton's ratio of at least about 15 when measured at a temperature of about 230°C and a strain rate of 25 sec$^{-1}$; (v) an elongational viscosity of at least about 50,000 Pa sec at a temperature of 230°C and a strain rate of 25 sec$^{-1}$; (vi) a high melting point (Tm), e.g., greater than about 166°C, or even greater than about 168°C, or even greater than about 170°C (the melting point can be determined by conventional methods, e.g., differential scanning calorimetry (DSC)); (vii) a molecular weight that is greater than about $1.75 \times 10^6$, or even greater than about $2 \times 10^6$, or even greater than about $2.25 \times 10^6$, such as, for example greater than about $2.5 \times 10^6$; (viii) a Melt Flow Rate (MFR) at 230°C and 2.16 kg weight of less than about 0.01 dg/min (i.e., a value is low enough that the MFR is essentially not measurable; Melt Flow Rate can be determined in accordance with conventional methods, such as ASTM D 1238-95 Condition L); (ix) exhibits stereo defects of less than about 50 per 10,000 carbon atoms, or less than about 40, or less than about 30, or even less than about 20 per 10,000 carbon atoms, e.g., the polypropylene can have fewer than about 10, or fewer than about 5 stereo defects per 10,000 carbon atoms; (x) a meso pentad fraction of greater than about 96 mol% mmmm pentads; and/or (xi) an amount extractable species (extractable by contacting the polypropylene with boiling xylene) of 0.5 wt.% or less, or 0.2 wt.% or less, or even 0.1 wt.% or less based on the weight of the polypropylene.

*Determining Melting point*

Differential scanning calorimetric (DSC) data can be obtained using a PerkinElmer Instrument, model Pyris 1 DSC. Samples weighing approximately 5.5-6.5 mg are sealed in aluminum sample pans. The DSC data are recorded by first heating the sample to 200°C at a rate of 150 °C/minute, called first melt (no data recorded). The sample is kept at 200°C for 10 minutes before a cooling-heating cycle is applied. The sample is then cooled from 200°C to 25°C at a rate of 10°C/minute, called crystallization, and then kept at 25°C for 10 minutes and heated to 200°C at a rate of 10°C/minute, called second melt. The thermal events in both crystallization and second melt are recorded. The melting temperature ($T_m$) is the peak temperature of the second melting curve and the crystallization temperature ($T_c$) is the peak temperature of the crystallization peak.

*Measuring Meso Pentad Fraction and the Amount of Extractable Species*

$^{13}$C NMR data is obtained at 100 MHz at 125°C on a Varian VXR 400 NMR spectrometer. A 90°C pulse, an acquisition time of 3.0 seconds, and a pulse delay of 20 seconds are employed. The spectra are broad band decoupled and acquired without gated decoupling. Similar relaxation times and nuclear Overhauser effects are expected for the methyl resonances of polypropylenes, which are generally the only homopolymer resonances used for quantitative purposes. A typical number of transients collected is 2500. The sample is dissolved in tetrachlorethane-d$_2$ at a concentration of 15% by weight. All spectral frequencies are recorded with respect to an internal tetramethylsilane standard. In the case of polypropylene homopolymer, the methyl resonances are recorded with respect to 21.81 ppm for mmmm, which is close to the reported literature value of 21.855 ppm for an internal tetramethylsilane standard. The pentad assignments used are well established.

The amount of extractable species (such as relatively low molecular weight and/or amorphous material, e.g., amorphous polyethylene) is determined by solubility in xylene at 135°C, according to the following procedure. Weigh out 2 grams of sample (either in pellet or ground pellet form) into 300 ml conical flask. Pour 200 ml of xylene into the conical flask with stir bar and secure the flask on a heating oil bath. Turn on the heating oil bath and allow melting of the polymer by leaving the flask in oil bath at 135°C for about 15 minutes. When melted, discontinue heating, but continue stirring through the cooling process. Allow the dissolved polymer to cool spontaneously overnight. The precipitate is filtered with Teflon filter paper and then dried under vacuum at 90°C. The quantity of xylene soluble is determined by calculating the percent by weight of total polymer sample ("A") less precipitate ("B") at room temperature [soluble content = ((A-B)/A) x 100].

*MWD Determination for the polyethylene and the polypropylene*

Mw and MWD of the polyethylene and polypropylene are determined using a High Temperature Size Exclusion Chromatograph, or "SEC", (GPC PL 220, Polymer Laboratories), equipped with a differential refractive index detector (DRI). The measurement is made in accordance with the procedure disclosed in "Macromolecules, Vol. 34, No. 19, pp. 6812-6820 (2001)". Three PLgel Mixed-B columns available from (available from Polymer Laboratories) are used for the Mw and MWD determination. For polyethylene, the nominal flow rate is 0.5 cm$^3$/min; the nominal injection volume is 300 $\mu$L; and the transfer lines, columns, and the DRI detector are contained in an oven maintained at 145°C. For polypropylene, the nominal flow rate is 1.0 cm$^3$/min; the nominal injection volume is 300 $\mu$L; and the transfer lines, columns, and the DRI detector are contained in an oven maintained at 160°C.

The GPC solvent used is filtered Aldrich reagent grade 1,2,4-Trichlorobenzene (TCB) containing approximately 1000 ppm of butylated hydroxy toluene (BHT). The TCB was degassed with an online degasser prior to introduction into the SEC. The same solvent is used as the SEC eluent. Polymer solutions were prepared by placing dry polymer in a glass container, adding the desired amount of the TCB solvent, and then heating the mixture at 160°C with continuous agitation for about 2 hours. The concentration of polymer solution was 0.25 to 0.75mg/ml. Sample solution is filtered off-line before injecting to GPC with $2\mu$m filter using a model SP260 Sample Prep Station (available from Polymer Laboratories).

The separation efficiency of the column set is calibrated with a calibration curve generated using a seventeen individual polystyrene standards ranging in Mp ("Mp" being defined as the peak in Mw) from about 580 to about 10,000,000. The polystyrene standards are obtained from Polymer Laboratories (Amherst, MA). A calibration curve (logMp vs. retention volume) is generated by recording the retention volume at the peak in the DRI signal for each PS standard and fitting this data set to a 2nd-order polynomial. Samples are analyzed using IGOR Pro, available from Wave Metrics, Inc.

### (2) Other components

In addition to the above components, the polyolefin solution can contain (a) additional polyolefin and/or (b) heat-resistant polymer resins having melting points or glass transition temperatures (Tg) of about 170°C or higher, in amounts that do not result in a deterioration of the properties of the microporous membrane (puncture strength, air permeability, etc.), for example 10% or less by mass based on the polyolefin composition.

### (a) Additional Polyolefins

The additional polyolefin can be at least one of (a) polybutene-1, polypentene-1, poly-4-methylpentene-1, polyhexene-1, polyoctene-1, polyvinyl acetate, polymethyl methacrylate, polystyrene and an ethylene/$\alpha$-olefin copolymer, each of which may have an Mw of from $1 \times 10^4$ to $4 \times 10^6$, and (b) a polyethylene wax having an Mw of from $1 \times 10^3$ to $1 \times 10^4$. Polybutene-1, polypentene-1, poly-4-methylpentene-1, polyhexene-1, polyoctene-1, polyvinyl acetate, polymethyl methacrylate and polystyrene are not restricted to homopolymers, but may be copolymers containing still other $\alpha$-olefins.

### (b) Heat-resistant resins

The heat-resistant resins can be, for example, (a) amorphous resins having melting points of about 170°C or higher, which may be partially crystalline, and (b) completely amorphous resins having Tg of about 170°C or higher and mixtures thereof. The melting point and Tg are determined by differential scanning calorimetry (DSC) according to method JIS K7121. Specific examples of the heat-resistant resins include polyesters such as polybutylene terephthalate (melting point: about 160-230°C), polyethylene terephthalate (melting point: about 250-270°C), etc., fluororesins, polyamides (melting point: 215-265°C), polyarylene sulfide, polyimides (Tg: 280°C or higher), polyamide imides (Tg: 280°C), polyether sulfone (Tg: 223°C), polyetheretherketone (melting point: 334°C), polycarbonates (melting point: 220-240°C), cellulose acetate (melting point: 220°C), cellulose triacetate (melting point: 300°C), polysulfone (Tg: 190°C), polyetherimide (melting point: 216°C), etc.

### (c) Content

The total amount of the additional polyolefin and the heat-resistant resin is preferably 20% or less, for example from about 0 to about 20%, by mass per 100% by mass of the polyolefin solution.

## [2] Production of the microporous membrane

For the sake of brevity, the production of the microporous membrane is described in terms of the wet process, though the invention is not limited thereto. Consequently, in an embodiment, the invention relates to a method for producing the microporous membrane comprising the steps of (1) combining certain specific polyolefins (generally in the form of polyolefin resins) and at least one diluent (e.g., a solvent) to form a mixture (e.g., a polyolefin solution), (2) extruding the mixture through a die to form an extrudate, (3) cooling the extrudate to form a cooled extrudate, (4) stretching the cooled extrudate at a certain specific temperature to form a stretched sheet, (5) removing at least a portion of the solvent or diluent from the stretched sheet to form a diluent-removed membrane, and (6) heat-setting the membrane product of step (5) to form the finished microporous membrane, the heat-setting being conducted in at least two stages wherein at least one earlier heat-setting stage is conducted at a temperature different from and lower than that of one or more of the later stages. A heat-setting treatment step (4i), a heat roll treatment step (4ii), and/or a hot solvent treatment step (4iii) may be conducted between the steps (4) and (5), if desired. Following step (6), a cross-linking step (7) with ionizing radiations, a hydrophilizing treatment step (7i) and/or a surface-coating treatment step (7ii) may be conducted after the step (6), if desired.

(1) Preparation of the polyolefin solution

The polyolefin resins may be combined with at least one diluent to prepare a mixture. Alternatively, the polyolefin resins may be combined, for example, by melt-blending, dry mixing, etc., to make a polymeric composition, which is then combined with at least one diluent to prepare the mixture. The mixture may contain, if desired, various additives such as anti-oxidants, fine silicate powder (pore-forming material), etc., in amounts which do not cause a deterioration in the properties of the microporous membrane produced therefrom, generally less than 5 wt.% in aggregate based on the weight of the mixture.

To enable stretching at relatively higher magnifications, the diluent, e.g., a membrane-forming solvent, is preferably liquid at room temperature. The liquid solvents can be, for example, aliphatic, alicyclic or aromatic hydrocarbons such as nonane, decane, decalin, p-xylene, undecane, dodecane, liquid paraffin, mineral oil distillates having boiling points comparable to those of the above hydrocarbons, and phthalates liquid at room temperature such as dibutyl phthalate, dioctyl phthalate, etc. To more effectively obtain an extrudate having a stable solvent content, a non-volatile liquid solvent such as liquid paraffin can be used. In an embodiment, one or more solid solvents which are miscible with the polyolefin composition during, for example, melt-blending, but solid at room temperature may be added to the liquid solvent Such solid solvents are preferably stearyl alcohol, ceryl alcohol, paraffin waxes, etc. In another embodiment, solid solvent can be used without liquid solvent. However, when only the solid solvent is used it can be more difficult to evenly stretch the extrudate.

The viscosity of the liquid solvent is preferably from about 30 to about 500 cSt, more preferably from about 30 to about 200 cSt, when measured at a temperature of 25°C. When the viscosity at 25°C is less than 30 cSt, the polyolefin solution may foam, resulting in difficulty in blending. On the other hand, when the viscosity is more than 500 cSt, the removal of the liquid solvent can be difficult.

Though not particularly critical, the uniform mixing of the polyolefin solution is preferably conducted in a double-screw extruder to prepare a high concentration polyolefin solution. The diluent may be added before starting mixing, or supplied to the double-screw extruder in an intermediate portion during mixing, though the latter is preferable.

The mixing (e.g., melt-blending) temperature of the polyolefin solution is preferably in a range of the melting point ("Tm") of the polyethylene resin +10°C to Tm +120°C. The melting point can be measured by differential scanning calorimetry (DSC) according to JIS K7121. In an embodiment, the melt-blending temperature is from about 140 to about 250°C, more preferably from about 170 to about 240°C, particularly where the polyethylene resin has a melting point of about 130 to about 140°C.

In one embodiment, the concentration of the polyolefin composition in the polyolefin solution is preferably from about 15 to about 50% by mass, more preferably from about 20 to about 45% by mass, based on the mass of the polyolefin solution.

The ratio L/D of the screw length L to the screw diameter D in the double-screw extruder is preferably in a range of from about 20 to about 100, more preferably in a range of from about 35 to about 70. When L/D is less than 20, melt-blending can be inefficient. When L/D is more than 100, the residence time of the polyolefin solution in the double-screw extruder can be too long. In this case, the membrane's molecular weight deteriorates as a result of excessive shearing and heating, which is undesirable. The cylinder of the double-screw extruder preferably has an inner diameter of from about 40 to about 100 mm.

In the double-screw extruder, the ratio Q/Ns of the amount Q (kg/h) of the polyolefin solution charged to the number of revolution Ns (rpm) of a screw is preferably from about 0.1 to about 0.55 kg/h/rpm. When Q/Ns is less than 0.1 kg/h/rpm, the polyolefin can be damaged by shearing, resulting in decrease in strength and meltdown temperature. When Q/Ns is more than 0.55 kg/h/rpm, uniform blending cannot be achieved. Q/Ns is more preferably from about 0.2 to about 0.5 kg/h/rpm. The number of revolutions Ns of the screw is preferably 180 rpm or more. Though not particularly critical, the upper limit of the number of revolutions Ns of the screw is preferably about 500 rpm.

(2) Extrusion

The components of the polyolefin solution can be melt-blended in the extruder and extruded from a die. In another embodiment, the components of the polyolefin solution can be extruded and then pelletized. In this embodiment, the pellets can be melt-blended and extruded in a second extrusion to make a gel-like molding or sheet. In either embodiment, the die can be a sheet-forming die having a rectangular orifice, a double-cylindrical, hollow die, an inflation die, etc. Although the die gap is not critical, in the case of a sheet-forming die, the die gap is preferably from about 0.1 to about 5 mm. The extrusion temperature is preferably from about 140 to about 250°C, and the extruding speed is preferably from about 0.2 to about 15 m/minute.

(3) Formation of cooled extrudate

The extrudate from the die is cooled to form a cooled extrudate, generally in the form of a high polyolefin content gel-like molding or sheet. Cooling is preferably conducted at least to a gelation temperature at a cooling rate of about 50°C/minute or more. Cooling is preferably conducted to about 25°C or lower. Such cooling sets the micro-phase of the polyolefin separated by the membrane-forming solvent. Generally, the slower cooling rate provides the gel-like sheet with larger pseudo-cell units, resulting in a coarser higher-order structure. On the other hand, a higher cooling rate results in denser cell units. A cooling rate of less than 50°C/minute can lead to increased crystallinity, making it more difficult to provide the gel-like sheet with suitable stretchability. Usable cooling methods include bringing the extrudate into contact with a cooling medium such as cooling air, cooling water, etc.; bringing the extrudate into contact with cooling rollers, etc.

By high polyolefin content, we mean the cooled extrudate comprises at least about 15%, for example from about 15 to about 50%, polyolefin, derived from the resins of the polyolefin composition, based on the mass of the cooled extrudate. When the polyolefin content is less than about 15% or more than 50% of the cooled extrudate it can be more difficult to form the microporous membrane. The cooled extrudate preferably has a polyolefin content at least as high as that of the polyolefin solution.

(4) Stretching the cooled extrudate

The cooled extrudate, generally in the form of a high polyolefin, content gel-like molding or sheet, is then stretched in at least one direction. While not wishing to be bound by any theory or model, it is believed that the gel-like sheet can be uniformly stretched because the sheet contains the diluent or solvent. The gel-like sheet is preferably stretched to a predetermined magnification after heating by, for example, a tenter method, a roll method, an inflation method or a combination thereof The stretching may be conducted monoaxially or biaxially, though the biaxial stretching is preferable. In the case of biaxial stretching, any of simultaneous biaxial stretching, sequential stretching or multi-stage stretching (for instance, a combination of the simultaneous biaxial stretching and the sequential stretching) may be used, though the simultaneous biaxial stretching is preferable. The amount of stretch in either direction need not be the same.

The stretching magnification of this stretching step can be, for example, 2 fold or more, preferably 3 to 30 fold in the case of monoaxial stretching. In the case of biaxial stretching, the stretching magnification can be, for example, 3 fold or more in any direction, namely 9 fold or more, such as 16 fold or more, e.g., 25 fold or more, in area magnification. An example for this stretching step would include stretching from about 9 fold to about 49 fold. Again, the amount of stretch in either direction need not be the same. With the area magnification of 9 fold or more, the pin puncture strength of the microporous membrane is improved. When the area magnification is more than, for example, 400 fold, stretching apparatuses, stretching operations, etc., involve large-sized stretching apparatuses, which can be difficult to operate.

To obtain a good microporous structure, the stretching temperature of this stretching step is relatively high, preferably from about the crystal dispersion temperature ("Tcd") of the combined polyethylene content of the cooled extrudate to about the melting point ("Tm"), e.g., in a range of Tcd to Tm of the combined polyethylene content. When the stretching temperature is lower than Tcd, it is believed that the combined polyethylene content is so insufficiently softened that the gel-like sheet is easily broken by stretching, failing to achieve high-magnification stretching.

The crystal dispersion temperature is determined by measuring the temperature characteristics of dynamic viscoelasticity according to ASTM D 4065. Because the combined polyethylene content herein has a crystal dispersion temperature of about 90 to 100°C, the stretching temperature is from about 90 to 125°C; preferably from about 100 to 125°C, more preferably from 105 to 125°C.

The above stretching causes cleavage between polyolefin, e.g., polyethylene, lamellas, making the polyolefin phases finer and forming large numbers of fibrils. The fibrils form a three-dimensional network structure. The stretching is believed to improve the mechanical strength of the microporous membrane and expands its pores, making the microporous membrane suitable for use as a battery separator.

Depending on the desired properties, stretching may be conducted with a temperature distribution in a thickness direction, to provide the microporous membrane with further improved mechanical strength. The detailed description of this method is given by Japanese Patent 3347854.

(5) Removal of the solvent or diluent

For the purpose of removing (washing away, displacing or dissolving) at least a portion of the solvent or diluent, a washing solvent is used. Because the polyolefin composition phase is phase-separated from the diluent or solvent phase, the removal of the solvent or diluent provides a microporous membrane. The removal of the solvent or diluent can be conducted by using one or more suitable washing solvents, i.e., one capable of displacing the liquid solvent from the membrane. Examples of the washing solvents include volatile solvents, e.g., saturated hydrocarbons such as pentane, hexane, heptane, etc., chlorinated hydrocarbons such as methylene chloride, carbon tetrachloride, etc., ethers such as diethyl ether, dioxane, etc., ketones such as methyl ethyl ketone, etc., linear fluorocarbons such as trifluoroethane, $C_6F_{14}$, etc., cyclic hydrofluorocarbons such as $C_5H_3F_7$, etc., hydrofluoroethers such as $C_4F_9OCH_3$, $C_4F_9OC_2H_5$, etc., perfluoroethers such as $C_4F_9OCF_3$, $C_4F_9OC_2F_5$, etc., and mixtures thereof.

The washing of the stretched membrane can be conducted by immersion in the washing solvent and/or showering with the washing solvent. The washing solvent used is preferably from about 300 to about 30,000 parts by mass per 100 parts by mass of the stretched membrane. The washing temperature is usually from about 15 to about 30°C, and if desired, heating may be conducted during washing. The heating temperature during washing is preferably about 80°C or lower. Washing is preferably conducted until the amount of the remaining liquid diluent or solvent becomes less than about 1% by mass of the amount of liquid solvent that was present in polyolefin solution prior to extrusion.

The microporous membrane deprived of the diluent or solvent can be dried by a heat-drying method, a wind-drying (e.g., air drying using moving air) method, etc., to remove remaining volatile components from the membrane, e.g., washing solvent. Any drying method capable of removing a significant amount of the washing solvent can be used. Preferably, substantially all of the washing solvent is removed during drying. The drying temperature is preferably equal to or lower than Tcd, more preferably 5°C or more lower than Tcd. Drying is conducted until the remaining washing solvent becomes preferably 5% or less by mass, more preferably 3% or less by mass, per 100% by mass (on a dry basis) of the microporous membrane. Insufficient drying undesirably can lead to decrease in the porosity of the microporous membrane by the subsequent heat treatment, resulting in poor permeability.

(6) Heat treatment

The membrane product of step (5) is thermally treated to a predetermined width (heat-set) in a heat-setting step having at least two stages. It is believed that heat-setting the membrane stabilizes crystallization and makes uniform lamellas in the membrane. The heat-setting stages are conducted by a tenter method. The heat-setting temperatures in each stage are preferably in a range of from about 20°C below Tcd ("Tcd - 20°C") to Tm. Further, at least one earlier (upstream) heat-setting stage is conducted at a temperature different from and lower than that of the other later (downstream) heat-setting stages. Still further, the heat-setting in the first stage is conducted at a temperature of about 10°C above (warmer than) Tcd ("Tcd + 10°C") or lower, preferably in a range of about Tcd - 10°C to about Tcd. The temperature difference between the first stage (i.e., the "initial" or most upstream heat set stage) and the last stage (i.e., the "final" or most downstream heat set stage) is about 15°C or higher, preferably about 20°C or higher, more preferably 25°C to 40°C or higher. In an embodiment, at least three heat-set stages are used. In another embodiment, at least five heat stages are used.

It is believed that using too low a heat-setting temperature can make it more difficult to produce a membrane having adequate pin puncture strength, tensile rupture strength, tensile rupture elongation and heat shrinkage resistance, while using too high a heat-setting temperature can make it more difficult to produce a membrane of sufficient permeability.

The membrane is heat set for a total time over all stages generally in the range of about 1 to about 200 seconds, typically 20 to about 90 seconds, e.g., from about 25 to about 80 seconds. The time per stage can be independently selected. For example, each heat-set time in each stage can be in the range of 0.2 to 195 seconds, or about 5 to about 50 seconds. In an embodiment, the microporous polymeric membrane comprises polyolefin, e.g., polyethylene, or polyethylene and polypropylene, and the temperature of the first heat-set stage is no more that 10°C warmer than the polyethylene's Tcd. Generally, the heat set-stages are arranged from upstream to downstream with no intervening process steps, but this is not required. For example, one or more stages of rollers, including heated rollers can be used between the heat set stages.

Heating a microporous polymeric membrane generally causes the membrane to shrink in size. During heat-setting, the edges of the membrane are gripped, e.g., by tenter clips fixing the edges of the membrane, and the tendency toward shrinkage during heating provides a tension in the plane of the membrane which is resisted by the gripping of the pairs of clips disposed on opposite edges of the membrane. The pairs of clips are generally mounted along an opposed pair of continuous rails or tracks (one at each edge of the membrane), and closing/opening means for the clips are provided so that the heat-setting process can be operated continuously if desired as the membrane advances in the machine direction from downstream to upstream along the production line. The rails or tracks can be configured so that the tenter clips traverse a path which keeps the width of the membrane constant during a heat-set stage, or alternatively, a path which results in a decrease in the size of the membrane, e.g., in TD, the machine direction ("MD"), or both MD and TD. For example, the path of the clips can be such as to cause the membrane to decrease in width (TD) from an initial width before heat setting to a final size in the range of from about 1% to about 30%, or about 5% to about 20% less than the initial width.

In an embodiment, the membrane contains polyethylene or polyethylene and polypropylene, and the temperature of the initial heat-set stage is 20°C below (cooler) than polyethylene's Tcd. Optionally, the temperature of each successive heat-set stage is the same as or is increased over that of the preceding heat-set stage. For example, one embodiment has five heat-set stages: an initial stage, a second stage immediately downstream of the initial stage, a third stage immediately downstream of the second stage, a fourth stage immediately downstream of the third stage and immediately upstream of the final stage, and a final stage. The temperature of the stages can increase monotonically and then level out, e.g., temperature of the initial stage is in the range of, e.g., 85°C to 95°C, such as 90°C; the temperature of the second stage is in the range of, e.g., 95°C to 115°C, such as 100°C or 110°C; the temperature of the third stage is in the range of, e.g., 115°C to 125°C, such as 110°C or 120°C; the temperature of the fourth stage is in the range of, e.g., 115°C to 127°C, for example 127°C; and the temperature of the final stage is in the range of, e.g., 120°C to 127°C, for example 127°C.

The term "stage temperature" means the average temperature within the stage, which can be determined, e.g., by locating thermocouples at various points inside the stage (generally along the machine direction) and then taking the numerical average (arithmetic mean) of the thermocouple values.

In an embodiment, the microporous polymeric membrane contains (a) from about 50 to about 80% of a first polyethylene resin having an Mw < $1 \times 10^6$, e.g., in the range of from about $2.5 \times 10^5$ to about $9 \times 10^5$ and an MWD of from about 3 to about 100, (b) from about 10 to about 30% of a second polyethylene resin having an Mw $\geq 1 \times 10^6$, e.g., in the range of from about $1.1 \times 10^6$ to about $3 \times 10^6$ and an MWD of from about 3 to about 100, and (c) from about 0 to about 40% of a polypropylene resin having an Mw $\geq 5 \times 10^5$, e.g., in the range of from about $8 \times 10^5$ to about $1.5 \times 10^6$, an MWD of from about 1 to about 100, and a heat of fusion $\geq 80$ J/g, e.g., in the range of from about 100 to about 120 J/g, percentages based on the mass of the polyolefin composition. The following table contains examples of selected heat-set conditions for a membrane produced from such a polyolefin composition.

| Stage | Temp. °C | Temp. °C | Temp. °C | Temp. °C |
|---|---|---|---|---|
| 1st | 90 | 90 | 90 | 90 |
| 2nd | 110 | 100 | 100 | 110 |
| 3rd | | 120 | 110 | 120 |
| 4th | | | 120 | 127 |
| 5th | | | | 127 |

In an embodiment the membrane production method includes a step for stretching the microporous membrane after at least a portion of the diluent or solvent has been removed (called dry stretching or dry orientation). In that case, the staged heat-setting is generally carried out after dry orientation, e.g., immediately after dry orientation. Dry orientation can be uniaxial, biaxial, or some combination thereof, and can be carried out according to conventional methods as those described for example in PCT Patent Applications WO 2008/016174 and WO 2007/117042. Dry orientation is characterized by a change in the planar size of the membrane from an initial size to a final size. The size change can be accomplished by gripping the edges of the membrane with opposed pairs of enter clips traveling along a pair of continuous rails or tracks. When the rails are configured to diverge, the distance between the opposed pairs of tenter clips increases, and the membrane is stretched. The downstream end of the dry orientation step is defined as the point at which there is no further stretching of the membrane, e.g., when the rails stop diverging. Heat setting of the membrane at the sized fixed at the conclusion of the dry orientation step (or smaller) can begin immediately at the conclusion of the dry orientation step.

The heat setting of each heat-set stage can be operated under conventional heat-set conditions. Two such conditions are referred to as "thermal fixation" or "thermal relaxation". The term "thermal fixation" refers to heat-setting carried out while maintaining the magnification selected during dry orientation, e.g., by the tenter clips. The term "thermal relaxation" refers to heat-setting carried out, e.g., with the opposed pairs of tenter clips set to provide a magnification that is smaller than the magnification used during dry orientation.

In an embodiment, staged heat-setting is carried out continuously. In another embodiment, staged heat-setting is carried out semi-continuously or intermittently, e.g., by carrying out dry orientation of the membrane, and then after an appropriate time interval has elapsed, carrying out heat-setting. While not required the amount of membrane width reduction can be set independently in each heat set stage. The path of the tenter clips can be set to cause the membrane to relax (or shrink) in the heat-setting step in the direction(s) of stretching to achieve a final magnification of about 0.7 to about 0.99 fold compared to the size of the membrane, e.g., at the start of the heat-setting step of (6). The membrane can relax at the ratio of from about 1% to about 30%, preferably from about 5% to about 20% smaller than the membrane size at the start of the heat-setting step of (6). The membrane can relax in TD, MD, or both.

It has been discovered that staged heat-setting provides a microporous membrane with a more uniform high permeability distribution across the membrane. After staged heat setting, the microporous membrane exhibits standard deviation of permeability in the TD, for example from about 10 to about 16 (seconds) or less, a TD heat shrinkage ratio at 105°C of 10% or less, for example from about 0.5 to about 5% or less, a TD heat shrinkage ratio at 130°C of 10% or less, for example from about 10 to about 20% or less, and a TMA shrinkage in the molten state at about 140°C of 20% or less, for example from about 1 to about 20% or less.

An annealing treatment can be conducted after the heat-setting step. Annealing differs from heat-set in that no force or load is applied to the microporous membrane, and may be conducted by using, e.g., a heating chamber with a belt conveyer or an air-floating-type heating chamber. The annealing may also be conducted continuously after the heat-setting with the tenter clips slackened. The annealing temperature is preferably Tm or lower, more preferably in a range from about 60°C to about Tm -5°C. Annealing is believed to provide the microporous membrane with improved permeability and strength.

Optionally, the stretched sheet between steps (4) and (5) may be heat-set. While the heat-setting method may be conducted the same way as described above for step (6), this is not required, and conventional single-stage heat-setting can be used.

Still further, at least one surface of the stretched sheet from step (4) may be brought into contact with one or more heater rollers following any of steps (4) to (6). The roller temperature is preferably in a range of from Tcd +10°C to Tm. The contact time of the heat roll with the stretched sheet is preferably from about 0.5 second to about 1 minute. The heat roll may have a flat or rough surface. The heat roll may have a suction functionality to remove the solvent. Though not particularly critical, one example of a roller-heating system may comprise holding heated oil in contact with a roller surface.

Still further, the stretched sheet may be contacted with a hot solvent between steps (4) and (5). A hot solvent treatment turns fibrils formed by stretching to a leaf vein form with relatively thick fiber trunks, providing the microporous membrane with large pore size and suitable strength and permeability. The term "leaf vein form" means that the fibrils have thick fiber trunks, and thin fibers extending in a complicated network structure from the trunks. The details of the hot solvent treatment method are described in WO 2000/20493.

(7) Cross-linking

The heat-set microporous membrane may be cross-linked by ionizing radiation rays such as $\alpha$-rays, $\beta$-rays, $\gamma$-rays, electron beams, etc. In the case of irradiating electron beams, the amount of electron beams is preferably from about 0.1 to about 100 Mrad, and the accelerating voltage is preferably from about 100 to about 300 kV. The cross-linking treatment elevates the melt down temperature of the microporous membrane.

(7i) Hydrophilizing treatment

The heat-set microporous membrane may be subjected to a hydrophilizing treatment (a treatment that makes the membrane more hydrophilic). The hydrophilizing treatment may be a monomer-grafting treatment, a surfactant treatment, a corona-discharging treatment, etc. The monomer-grafting treatment is preferably conducted after the cross-linking treatment.

In the case of surfactant treatment hydrophilizing the heat-set microporous membrane, any of nonionic surfactants, cationic surfactants, anionic surfactants and amphoteric surfactants may be used, and the nonionic surfactants are preferred. The microporous membrane can be dipped in a solution of the surfactant in water or a lower alcohol such as methanol, ethanol, isopropyl alcohol, etc., or coated with the solution by a doctor blade method.

(7ii) Surface-coating treatment

While not required, the heat-set microporous membrane resulting from step (6) can be coated with porous polypropylene, porous fluororesins such as polyvinylidene fluoride and polytetrafluoroethylene, porous polyimides, porous polyphenylene sulfide, etc., to improve melt down properties when the membrane is used as a battery separator. The polypropylene used for the coating preferably has Mw of from about 5,000 to about 500,000, and a solubility of about 0.5 grams or more in 100 grams of toluene at 25°C. Such polypropylene more preferably has a racemic diade fraction of from about 0.12 to about 0.88, the racemic diade being a structural unit in which two adjacent monomer units are minor-image isomers to each other. The surface-coating layer may be applied, for instance, by applying a solution of the above coating resin in a good solvent to the microporous membrane, removing part of the solvent to increase a resin concentration, thereby forming a structure in which a resin phase and a solvent phase are separated, and removing the remainder of the solvent. Examples of good solvents for this purpose include aromatic compounds, such as toluene or xylene.

### [3] Structure, properties, and composition of microporous membrane

(1) Structure

The microporous membrane of the invention is a porous membrane having a composition derived from the polymer resins used to produce the membrane. As used herein, the term "pore size" is analogous to the pore diameter in the case where the pores are approximately cylindrical. The thickness of the membrane generally is in the range of from about 1 to 100 $\mu$m, typically 5 to 50$\mu$m.

Because the microporous membrane of the invention has relatively large internal space and openings due to coarse domains, it has suitable permeability and electrolytic solution absorption, with little air permeability variation when compressed. This Microporous membrane also has relatively small internal space and openings which influence safety properties of the membrane when used as a battery separator, such as shutdown temperature and shutdown speed. Accordingly, lithium ion batteries such as, for example, lithium ion secondary batteries comprising separators formed by such microporous membrane have suitable productivity and cyclability while retaining their high safety performance.

(2) Properties

The microporous membrane of the present invention exhibits a standard deviation of air permeability (normalized to a membrane thickness of 16 $\mu$m) across the membrane in TD of 20 seconds (Gurley value) or less, for example from about 10 to about 16 seconds or less, a TD heat shrinkage ratio at 105°C of 10% or less, for example from about 0.5 to about 5% or less, a TD heat shrinkage ratio at 130°C of 20% or less, for example from about 10 to about 15% or less, and a TMA shrinkage in the molten state at about 140°C of 20% or less, for example from about 1 to about 10% or less, as well as a high melt down temperature making it a superior battery separator, especially, for example, for lithium ion batteries.

The membrane exiting the heat-setting step is deformed along its edge as a result of the tenter clips gripping the membrane. This portion of the membrane is generally cut way by slitting (cutting off) a portion of the membrane adjacent to each edge. The slitting can be operated continuously, e.g., by locating cutting blades oriented parallel to the machine direction a desired distance inward (along TD) from the edge of the membrane. The edge material is cut off and conducted away from the process. Generally, the slitting reduces the width of the membrane to about 90% to about 95% of the width of the membrane exiting the heat set step. This slitting step can be referred to as a "first" slitting step when additional slitting is used downstream, e.g., in order to produce microporous membrane of a desired final width for battery manufacturing.

The membrane's air permeability through the membrane can be measured at selected points along TD (i.e., across the membrane). Unless the contexts indicate otherwise, the term "air permeability" as used herein refers to the arithmetic mean (i.e., the numerical average) of the measured values. While not required, a plurality of measurement points approximately equally spaced along TD and referenced to the center line of the membrane (parallel to the machine direction) are used to determine the air permeability and the standard deviation of air permeability. Since the measured points are referenced to the center line of the membrane, the measurements can be made before or after slitting.

In an embodiment, the selected air permeability points are along TD and located between initial and final points, the initial and final points being optionally equidistant along TD from the center line of the membrane. The distance between the initial point and final point can be, e.g., about 75%, or alternatively about 80%, or alternatively 90%, or alternatively about 95% of the width of the membrane after the heat setting step but before slitting, i.e., before first slitting and any slitting downstream of first slitting. While air permeability and the standard deviation of air permeability can be determined with an initial point and final point only, typically those points and a plurality of points along TD are use to determine those values; e.g., at least five points, or at least ten points, or at least 20 points, or at least 40 points. For example, the number of points can be in the range of ten to thirty points, and, optionally, the points can be equally spaced along TD at a convenient interval, e.g., the distance between adjacent measurement points can be in the range of about 25mm to about 100 mm.

The term "$\mu$" refers to the arithmetic mean of the air permeability values (Gurley, values, measured in seconds per 100cm$^3$) determined at the measurement points along TD. The standard deviation of the measured air permeability values "$\sigma$" is defined as the square root of the variance, i.e., $\sigma = (\dfrac{\sum (AP - \mu)^2}{N})^{1/2}$ , where AP are the measured air permeability values (Gurley values) at each measurement point and N is the number of measurement points.

The membrane can be characterized by a heat shrinkage value measured at 105°C, which can be measured as follows. A sample of the microporous membrane is cut along the TD and MD directions to provide a square shape 100mm long on its sides (i.e., 100mm in TD and 100mmin MD). The sample is then heated in thermal equilibrium (e.g.,

in an oven) at a temperature of 105°C for eight hours, and then cooled. The shrinkage ratio in MD (expressed as a percent) is equal to the length of the sample in MD before heating divided by the length of the sample in MD after heating times 100 percent. The shrinkage ratio in TD (expressed as a percent) is equal to the length of the sample in TD before heating divided by the length of the sample in TD after heating times 100 percent.

The membrane can also be characterized by a heat shrinkage value measured at 130°C. This value can be of particular significance since 130°C is generally within the operating temperature range of a lithium ion secondary battery during charging and discharging, albeit near the upper (shut-down) end of this range. The measurement is slightly different from the measurement of heat shrinkage at 105°C, reflecting the fact that the edges of the membrane parallel to the transverse direction are generally fixed within the battery, with a limited degree of freedom allowed for expansion or contraction (shrinkage) in the transverse direction, particularly near the center of the edges parallel to the machine direction. Accordingly, a square sample of microporous film measuring 50mm along TD and 50mm along MD is mounted in a frame, with the edges parallel to TD fixed to the frame (e.g., by tape) leaving a clear aperture of 35mm in MD and 50mm in TD. The frame with sample attached is then heated in thermal equilibrium (e.g., in an oven) at a temperature of 130°C for thirty minutes, and then cooled. TD heat shrinkage generally causes the edges of the film parallel to MD to bow slightly inward (toward the center of the frame's aperture). The shrinkage ratio in TD (expressed as a percent) is equal to the length of the sample in TD before heating divided by the narrowest length (within the frame) of the sample in TD after heating times 100 percent.

When the heat shrinkage ratio after being exposed to 105°C for 8 hours exceeds 10% in the transverse direction, heat generated in batteries with the microporous membrane separators can cause the shrinkage of the separators, making it more likely that short-circuiting occurs near the edges of the separators. Similarly, when the heat shrinkage ratio after being exposed to 130°C for 30 minutes exceeds 30% in the transverse direction, heat generated in batteries using the microporous membrane separators can make it more likely that short-circuiting occurs near the edges of the separators. Preferably, the heat shrinkage ratio is from about 0.5 to about 5% at 105°C, and from about 10 to about 55% at 130°C.

The microporous membranes generally have a shut down temperature of 140°C or lower, and a melt down temperature of 145°C or higher. Melt down temperature is measured by the following procedure: A rectangular sample of 3 mm x 50 mm is cut out of the microporous membrane such that the long axis of the sample is aligned with the transverse direction of the microporous membrane as it is produced in the process and the short axis is aligned with the machine direction. The sample is set in a thermomechanical analyzer (TMA/SS6000 available from Seiko Instruments, Inc.) at a chuck distance of 10 mm, i.e., the distance from the upper chuck to the lower chuck is 10mm. The lower chuck is fixed and a load of 19.6mN applied to the sample at the upper chuck. The chucks and sample are enclosed in a tube which can be heated. Starting at 30°C, the temperature inside the tube is elevated at a rate of 5°C/minute, and sample length change under the 19.6mN load is measured at intervals of 0.5 second and recorded as temperature is increased. The temperature is increased to 200°C. The melt down temperature of the sample is defined as the temperature at which the sample breaks, generally at a temperature in the range of about 145°C to about 200°C. A particular commercial grade battery separator has a melt down temperature of 145°C, so that or higher temperatures than that are preferred, i.e. 145°C or higher.

Maximum shrinkage in the molten state is measured by the following procedure: Using the procedure described for the measurement of melt down temperature, the sample length measured in the temperature range of from 135°C to 145°C are recorded. The maximum shrinkage in the molten state is defined as the sample length between the chucks measured at 23°C (L1 equal to 10mm) minus the minimum length measured generally in the range of about 135°C to about 145°C (equal to L2) divided by L1, i.e., [L1-L2]/L1*100%. A particular commercial grade battery separator has a thermal mechanical analysis maximum shrinkage in the molten state at 140°C of 30%, so a lower percentages than that is preferred, i.e. 20% or less.

In preferred embodiments, the microporous membrane of the present invention also has at least one of the following properties.

(a) Air permeability of from about 20 to about 400 seconds/100 cm$^3$ (converted to the value at 16 $\mu$m thickness)

When the membrane's air permeability measured according to JIS P8117 is from 20 to 400 seconds/100 cm$^3$/16 $\mu$m, batteries with separators formed by the microporous membrane have suitably large capacity and good cyclability. When the air permeability is less than 20 seconds/100 cm$^3$/16 $\mu$m, shutdown does not sufficiently occur because pores are so large that they cannot fully close when the temperatures inside the batteries are elevated at 140°C or more. Air permeability $P_1$ is measured on a microporous membrane having a thickness $T_1$ according to JIS P8117 is converted (i.e., normalized) to air permeability $P_2$ at a thickness of 16 $\mu$m by the equation of $P_2 = (P_1 \times 16)/T_1$. An air permeability converted to the equivalent value at a membrane thickness of 16 $\mu$m is expressed in units of [seconds/100 cm$^3$/16 $\mu$m].

(b) Porosity of from about 25 to about 80%

When the porosity is less than 25%, the microporous membrane is generally less useful as a battery separator. When the porosity exceeds 80%, battery separators formed by the microporous membrane are believed to have insufficient strength, which can result in the short-circuiting of battery's electrodes.

Porosity is measured by a weight method using the formula: Porosity % = 100 x (w2-w1)/w2, wherein "w1" is the actual weight of film and "w2" is the assumed weight of 100% polyethylene.

(c) Pin puncture strength of 3,000 mN or more (converted to the value at 16 $\mu$m thickness)

The membrane's pin puncture strength (converted to the value at membrane thickness of 16 $\mu$m) is represented by the maximum load measured when the microporous membrane is pricked with a needle of 1 mm in diameter with a spherical end surface (radius R of curvature: 0.5 mm) at a speed of 2 mm/second. When the pin puncture strength is low, e.g., less than 2,000 mN/16 $\mu$m, it is generally more difficult to produce a battery having sufficient protection against internal short-circuiting. The pin puncture strength is preferably 3,000 mN/16 $\mu$m or more, for example, 3,500 mN/16 $\mu$m or more.

(d) Tensile strength of 60,000 kPa or more

A tensile strength of 40,000 kPa or more in both longitudinal and transverse directions (measured according to ASTM D-882 using a 10 mm wide rectangular test piece), is characteristic of suitable durable microporous membranes, particularly when used as battery separators. The tensile rupture strength is preferably about 80,000 kPa or more, for example about 100,000 kPa or more.

(e) Tensile elongation of 100% or more

A tensile elongation of 100% or more in both longitudinal and transverse directions (measured according to ASTM D-882 using a 10 mm wide rectangular test piece), is characteristic of suitably durable microporous membranes, particularly when used as battery separators.

(f) Thickness variation ratio of 20% or less after heat compression

The thickness variation ratio after heat compression at 90°C under pressure of 2.2 MPa for 5 minutes is generally 20% (expressed as an absolute value) or less per 100% of the thickness before compression. Thickness can be measured as in (h) below. Thickness variation ratio is calculated by the formula of (average thickness after compression - average thickness before compression) / (average thickness before compression) x 100.

Batteries comprising microporous membrane separators with a thickness variation ratio of 20% or less, preferably 10% or less, have suitably large capacity and good cyclability.

(g) Air permeability after heat compression of 700sec/100 cm$^3$ or less

Each microporous membrane having a thickness of $T_1$ is heat-compressed under the above conditions, and measured with respect to air permeability $P_1$ according to JIS P8117.

The microporous polyolefin membrane when heat-compressed under the above conditions generally has air permeability (Gurley value) of 700 sec/100 cm$^3$ or less. Batteries using such membranes have suitably large capacity and cyclability. The air permeability is preferably 650 sec/100 cm$^3$ or less.

(h) Average Thickness ($\mu$m)

The thickness of each microporous membrane is measured by a contact thickness meter at 5 cm longitudinal intervals over the width of 30 cm, and averaged. The thickness meter used is a Litematic made by Mitsutoyo Corporation. The thickness of the membrane generally is in the range of from about 1 to 100 $\mu$m, typically 10 to 100$\mu$m.

(3) Microporous membrane composition

The microporous polymeric membrane generally comprises the polymer of the resin or resins used to produce the membrane. When the membrane is produced in a wet process, a small amount of washing solvent and/or process solvent can also be present, generally in amounts less than 1 wt% based on the weight of the microporous polyolefin membrane. A small amount of polymer molecular weight degradation might occur during processing, but this is acceptable. In an embodiment where the polymer is polyolefin and the membrane is produced in a wet process, molecular weight degradation during processing, if any, causes the value of MWD of the polyolefin in the membrane to differ from the MWD of the polyolefin solution by no more than about 50%, or no more than about 1%, or no more than about 0.1%.

Polyolefin

An embodiment of the microporous membrane of the present invention comprises (a) from about 50 to about 100% of a first polyethylene having an Mw < $1 \times 10^6$, e.g., in the range of from about $2.5 \times 10^5$ to about $9 \times 10^5$, for example from about $4.5 \times 10^5$ to about $6.5 \times 10^5$, and an MWD of from about 3 to about 100, for example from about 3.5 to about 20, (b) from about 0 to about 40% of a second polyethylene having an Mw ≥ $1 \times 10^6$, e.g., in the range of from about $1.1 \times 10^6$ to about $5 \times 10^6$, for example from about $1.5 \times 10^6$ to about $3 \times 10^6$, and an MWD of from about 3 to about 100, for example from about 3.5 to about 20, and (c) from about 0 to about 50% of a polypropylene having an Mw ≥ $5 \times 10^5$, for example from about $8 \times 10^5$ to about $1.5 \times 10^6$, an MWD of from about 1 to about 100, for example from about 2 to about 50 or from about 2 to about 6, and a heat of fusion of 90 J/g or higher, for example from about 100 to about 120 J/g, percentages based on the mass of the membrane.

(a) Polyethylene

*(i) Composition*

The first polyethylene has an Mw < $1 \times 10^6$, e.g., in the range of from about $2.5 \times 10^5$ to about $9 \times 10^5$ and an MWD of from about 3 to about 100. A non-limiting example of the first polyethylene for use herein is one that has a Mw of from about $4.5 \times 10^5$ to about $6.5 \times 10^5$ and an MWD of from about 3.5 to about 20 or from about 4 to about 10. The first polyethylene can be an ethylene homopolymer, or a copolymer of ethylene and ≤ 5 mole % of a comonomer selected from propylene, butene-1, pentene-1, hexene-1, 4-methylpentene-1, octene-1, vinyl acetate, methyl methacrylate, or styrene or combinations thereof Such copolymer is preferably produced using a single-site catalyst.
The second polyethylene, for example an ultra-high molecular weight polyethylene (UHMWPE), is optional and has an MWD ≥ $1 \times 10^6$, e.g., in the range of from about $1.1 \times 10^6$ to about $5 \times 10^6$ and an MWD of from about 3 to about 100. A non-limiting example of the second polyethylene for use herein is one that has an Mw of from about $1.5 \times 10^6$ to about $3 \times 10^6$ and an MWD of from about 4 to about 10. The second polyethylene can be an ethylene homopolymer, or a copolymer of ethylene and ≤ 5 mole % of a comonomer selected from propylene, butene-1, pentene-1, hexene-1, 4-methylpentene-1, octene-1, vinyl acetate, methyl methacrylate, or styrene or combinations thereof. Such copolymer is preferably produced using a single-site catalyst.

*(ii) Molecular weight distribution MWD of the polyethylene in the microporous membrane*

Though not critical, the MWD of the polyethylene in the membrane is preferably from about 3 to about 100, for example from about 3.5 to about 20. When the MWD is less than 3, the percentage of a higher molecular weight component is too high to conduct melt extrusion easily. On the other hand, when the MWD is more than 100, the percentage of a lower molecular weight component is too high, resulting in decrease in the strength of the resulting microporous membrane. It is noted that some degradation of Mw from that of the starting resins may occur during manufacturing of the membrane by the present method, for example the Mw of the first and/or second polyethylene in the membrane product may be lower than that of the first and/or second polyethylene resins in the polyolefin composition portion of the polyolefin solution of method step (1).

(a) Polypropylene

*(i) Composition*

The polypropylene has an Mw of about $5 \times 10^5$ or higher, for example from about $8 \times 10^5$ to about $1.5 \times 10^6$, an MWD of from about 1 to about 100, for example from about 2 to about 50, and a heat of fusion of 90 J/g or higher, for example from about 100 to about 120 J/g, and can be a propylene homopolymer or a copolymer of propylene and ≤ 10 mole % of a comonomer selected from ethylene, butene-1, pentene-1, hexene-1, 4-methylpentene-1, octene-1, vinyl acetate, methyl methacrylate, styrene, etc., and diolefins such as butadiene, 1,5-hexadiene, 1,7-octadiene, 1,9-decadiene, etc. The percentage of the comonomer olefin in the propylene copolymer is preferably in a range that does not deteriorate the properties of the microporous membrane such as heat resistance, compression resistance, heat shrinkage resistance, etc. Again, it is noted that some degradation of Mw from that of the starting resins may occur during manufacturing of the membrane by the present method, for example the Mw of the polypropylene in the membrane product may be lower than that of the polypropylene resin in the polyolefin composition portion of the polyolefin solution of method step (1).

The heat of fusion is determined by differential scanning calorimetry (DSC). The DSC is conducted using a TA Instrument MDSC 2920 or Q1000 Tzero-DSC and data analyzed using standard analysis software. Typically, 3 to 10 mg of polymer is encapsulated in an aluminum pan and loaded into the instrument at room temperature. The sample is cooled to either -130°C or -70°C and heated to 210°C at a heating rate of 10°C/minute to evaluate the glass transition and melting behavior for the sample. The sample is held at 210°C for 5 minutes to destroy its thermal history. Crystallization behavior is evaluated by cooling the sample from the melt to sub-ambient temperature at a cooling rate of 10°C/minute. The sample is held at the low temperature for 10 minutes to fully equilibrate in the solid state and achieve a steady state. Second heating data is measured by heating this melt crystallized sample at 10°C/minute. Second heating data thus provides phase behavior for samples crystallized under controlled thermal history conditions. The endothermic melting transition (first and second melt) and exothermic crystallization transition are analyzed for onset of transition and peak temperature. The area under the curve is used to determine the heat of fusion ($\Delta H_f$).

In an embodiment, the amount of polypropylene in the membrane is 50% or less by mass based on the total mass of polyolefin in the membrane.

Other components

In addition to the above components, the membrane can contain an additional polyolefin and/or heat-resistant polymer having melting points or glass transition temperatures (Tg) of about 170°C or higher.

(a) Additional Polyolefin

The additional polyolefin can be one or more of (a) polybutene-1, polypentene-1, poly-4-methylpentene-1, polyhexene-1, polyoctene-1, polyvinyl acetate, polymethyl methacrylate, polystyrene and an ethylene/$\alpha$-olefin copolymer, each of which may have an Mw of from $1 \times 10^4$ to $4 \times 10^6$, and (b) a polyethylene wax having an Mw of from $1 \times 10^3$ to $1 \times 10^4$. Polybutene-1, polypentene-1, poly-4-methylpentene-1, polyhexene-1, polyoctene-1, polyvinyl acetate, polymethyl methacrylate and polystyrene are not restricted to homopolymers, but may be copolymers containing other $\alpha$-olefins.

(b) Heat-resistant polymer

The heat-resistant polymers are preferably (i) amorphous polymers having melting points of about 170°C or higher, which may be partially crystalline, and/or (ii) amorphous polymers having a Tg of about 170°C or higher. The melting point and Tg are determined by differential scanning calorimetry (DSC) according to JIS K7121. Examples of the heat-resistant polymers include polyesters such as polybutylene terephthalate (melting point: about 160 to 230°C), polyethylene terephthalate (melting point: about 250 to 270°C), etc., fluororesins, polyamides (melting point: 215 to 265°C), polyarylene sulfide, polyimides (Tg: 280°C or higher), polyamide imides (Tg: 280°C), polyether sulfone (Tg: 223°C), polyetheretherketone (melting point: 334°C), polycarbonates (melting point: 220 to 240°C), cellulose acetate (melting point: 220°C), cellulose triacetate (melting point: 300°C), polysulfone (Tg: 190°C), polyetherimide (melting point: 216°C), etc.

(c) Content

The total amount of the additional polyolefin and the heat-resistant polymer in the membrane is preferably 20% or less by mass per 100% by mass of the membrane.

**[4] Battery separator**

The microporous membranes of the invention are useful as battery separators. In an embodiment, the microporous membranes of the present invention have a thickness of from about 3 to about 200 $\mu$m, or from about 5 to about 50 $\mu$m, or from about 7 to about 35 $\mu$m, though the most suitable thickness is properly selected depending on the type of battery to be manufactured.

**[5] Battery**

Though not particularly critical, the microporous membranes of the present invention may be used as separators for primary and secondary batteries, particularly such as lithium ion secondary batteries, lithium-polymer secondary batteries, nickel-hydrogen secondary batteries, nickel-cadmium secondary batteries, nickel-zinc secondary batteries, silver-zinc secondary batteries, particularly for lithium ion secondary batteries.

The lithium ion secondary battery comprises a cathode and an anode laminated via a separator, and the separator contains an electrolyte, usually in the form of an electrolytic solution ("electrolyte"). The electrode structure is not critical. Conventional structures are suitable. The electrode structure may be, for instance, a coin type in which a disc-shaped positive and anodes are opposing, a laminate type in which planar positive and anodes are alternately laminated, a toroidal type in which ribbon-shaped positive and anodes are wound, etc.

The cathode usually comprises a current collector, and a cathodic active material layer capable of absorbing and discharging lithium ions which is formed on the current collector. The cathodic active materials may be inorganic compounds such as transition metal oxides, composite oxides of lithium and transition metals (lithium composite oxides), transition metal sulfides, etc. The transition metals may be V, Mn, Fe, Co, Ni, etc. Preferred examples of the lithium composite oxides are lithium nickelate, lithium cobaltate, lithium manganate, laminar lithium composite oxides based on $\alpha$-NaFeO$_2$, etc. The anode comprises a current collector, and a negative-electrode active material layer formed on the current collector. The negative-electrode active materials may be carbonaceous materials such as natural graphite, artificial graphite, coke, carbon black, etc.

The electrolytic solution can be a solution obtained by dissolving a lithium salt in an organic solvent. The lithium salt may be LiClO$_4$, LiPF$_6$, LiAsF$_6$, LiSbF$_6$, LiBF$_4$, LiCF$_3$SO$_3$, LiN(CF$_3$SO$_2$)$_2$, LiC(CF$_3$SO$_2$)$_3$, Li$_2$B$_{10}$Cl$_{10}$, LiN(C$_2$F$_5$SO$_2$)$_2$, LiPF$_4$(CF$_3$)$_2$, LiPF$_3$(C$_2$F$_5$)$_3$, lower aliphatic carboxylates of lithium, LiAlCl$_4$, etc. These lithium salts may be used alone or in combination. The organic solvent may be an organic solvent having a high boiling point and high dielectric constant such as ethylene carbonate, propylene carbonate, ethylmethyl carbonate, $\gamma$-butyrolactone, etc.; and/or organic solvents having low boiling points and low viscosity such as tetrahydrofuran, 2-methyltetrahydrofuran, dimethoxyethane, dioxolane, dimethyl carbonate, dimethyl carbonate, etc. These organic solvents may be used alone or in combination. Because the organic solvents having high dielectric constants generally have high viscosity, while those having low viscosity generally have low dielectric constants, their mixtures are preferably used.

When the battery is assembled, the separator is impregnated with the electrolytic solution, so that the separator (microporous membrane) is provided with ion permeability. The impregnation treatment is usually conducted by immersing the microporous membrane in the electrolytic solution at room temperature. When a cylindrical battery is assembled, for instance, a cathode sheet, a microporous membrane separator and an anode sheet are laminated in this order, and the resultant laminate is wound to a toroidal-type electrode assembly. The resultant electrode assembly is charged/fanned into a battery can and then impregnated with the above electrolytic solution, and the battery lid acting as a cathode terminal provided with a safety valve is caulked to the battery can via a gasket to produce a battery.

The present invention will be explained in more detail referring to Examples below without intention of restricting the scope of the present invention.

Example 1

A polyolefin composition comprising (a) 80% first polyethylene resin having an Mw of 5.6 x 10$^5$ and an MWD of 4.05, (b) 20% second polyethylene resin having an Mw of 1.9 x 10$^6$ and an MWD of 5.09, and (c) no added polypropylene resin, is prepared by dry-blending, percentages by mass of the polyolefin composition. The polyethylene resin in the composition has a melting point of 135°C, a crystal dispersion temperature of 100°C, and an MWD of 14.4.

Twenty-five parts by mass of the resultant polyolefin composition is charged into a strong-blending double-screw extruder having an inner dianleter of 58 mm and L/D of 42, and 75 parts by mass of liquid paraffin (50 cst at 40°C) is supplied to the double-screw extruder via a side feeder. Melt-blending is conducted at 210°C and 200 rpm to prepare a polyethylene solution. This polyethylene solution is extruded from a T-die mounted to the double-screw extruder. The extrudate is cooled while passing through cooling rolls controlled at 40°C, to form a cooled extrudate, i.e. gel-like sheet.

Using a tenter-stretching machine, the gel-like sheet is simultaneously biaxially stretched at 114.5°C to 5 fold in both longitudinal and transverse directions. The stretched gel-like sheet is immersed in a bath of methylene chloride controlled at 25°C to remove the liquid paraffin to an amount of 1% or less by mass of the amount of liquid paraffin present in the polyolefin solution, and dried by an air flow at room temperature. The dried membrane is heat-set by tenter-type machine in five separate stages at 90°C for 10 seconds in the first stage, 100°C for 10 seconds in the second stage, 120°C for 10 seconds in the third stage, 127°C for 10 seconds in the fourth stage, and 127°C for 10 seconds in the fifth stage, to produce a microporous membrane. The film width in TD in the first four heat-setting stages is held constant, and in the final heat setting stage, the film is subjected to a controlled reduction in width (TD) to a final width that is 6.5% smaller than the film width at the start of the first heat setting stage.

Example 2

Example 1 is repeated except for the staged heat-setting of the dried membrane being conducted at 90°C for 10 seconds in the first stage, 127°C for 10 seconds in the second stage, 127°C for 10 seconds in the third stage, 127°C for 10 seconds in the fourth stage, and 127°C for 10 seconds in the fifth stage, to produce a microporous membrane.

Example 3

Example 1 is repeated except for the staged heat-setting of the dried membrane being conducted at 100°C for 10 seconds in the first stage, 100°C for 10 seconds in the second stage, 100°C for 10 seconds in the third stage, 127°C for 10 seconds in the fourth stage, and 127°C for 10 seconds in the fifth stage, to produce a microporous membrane.

Example 4

Example 1 is repeated except for the staged heat-setting of the dried membrane being conducted at 90°C for 10 seconds in the first stage, 120°C for 10 seconds in the second stage, 127°C for 10 seconds in the third stage, 127°C for 10 seconds in the fourth stage, and 127°C for 10 seconds in the fifth stage, to produce a microporous membrane. Also, the film relaxes (shrinks) in TD stage four to a width that is 16.1 % smaller than the film width at the start of stage one.

Example 5

Example 1 is repeated except for the polyolefin composition comprising 50% by mass of the first polyethylene resin, and 30% by mass of polypropylene resin having an Mw of $1.1 \times 10^{6}$, an MWD of 5.0, and a heat of fusion of 114 J/g. Also, the staged heat-setting of the dried membrane is conducted at 90°C for 10 seconds in the first stage, 120°C for 10 seconds in the second stage, 127°C for 10 seconds in the third stage, 127°C for 10 seconds in the fourth stage, and 127°C for 10 seconds in the fifth stage, to produce a microporous membrane.

Comparative Example 1

Example 1 is repeated except for the staged heat-setting of the dried membrane being conducted at 127°C for 10 seconds in each stage to produce a microporous membrane.

Comparative Example 2

Comparative Example 1 is repeated except for the staged heat-setting of the dried membrane being conducted at 115°C for 10 seconds in the first stage to produce a microporous membrane

Comparative Example 3

Comparative Example 1 is repeated except for the staged heat-setting of the dried membrane being conducted at 90°C for 10 seconds in each stage to produce a microporous membrane.

Comparative Example 4

Example 1 is repeated except for the staged heat-setting of the dried membrane being conducted at 127°C for 10 seconds in the first stage, and 90°C for 10 seconds in each of the other stages to produce a microporous membrane.

Comparative Example 5

Comparative Example 4 is repeated except the film relaxes in TD stage four to a width that is 16.1 % smaller than the width at the start of stage one.

Comparative Example 6

Example 5 is repeated except for the polyolefin solution comprising 30% polyolefin resin composition and the staged heat-setting of the dried membrane being conducted at 127°C for 10 seconds in each stage to produce a microporous membrane.

**Properties**

The properties of the multi-layer microporous membranes obtained in the Examples and Comparative Examples are measured in accordance with the methods described in section [3](2). The results are shown in Table 1 in units indicated below.

### Table 1

| PROPERTIES | Ex 1 | Ex 2 | Ex 3 | Ex 4 | Ex 5 |
|---|---|---|---|---|---|
| Thickness μm | 16.2 | 16.1 | 16.3 | 16.2 | 16.6 |
| Air Perm. | 270 | 275 | 258 | 277 | 322 |
| Porosity % | 38.7 | 38.5 | 38.9 | 37.8 | 38.9 |

| | | | | | |
|---|---|---|---|---|---|
| Punct. Strength | 3597 | 3567 | 3508 | 3528 | 4057 |
| Tensile Strength MD//TD | 142100 109760 | 142100 112700 | 139160 108780 | 137200 112700 | 146020 122500 |
| Tensile Elongation MD//TD | 145 211 | 140 210 | 140 200 | 140 210 | 140 190 |
| Heat Shrinkage 105°C MD//TD | 3.1 2.2 | 2.9 2.3 | 2.8 2.4 | 3.0 1.8 | 4.6 3.9 |
| Heat Shrinkage 130°C MD//TD | 24.0 13.5 | 22.0 12.4 | 24.0 13.0 | 22.5 12.0 | 24.6 14.6 |
| STDEV of air permeability in TD | 12.5 | 15.9 | 12.9 | 14.8 | 14.5 |
| Thick. Var. Aft. Heat Comp. % (Abs. Val.) | 9 | 9 | 9 | 9 | 8 |
| Air Perm. Aft. Heat Comp. | 572 | 560 | 554 | 565 | 639 |
| Melt Down Temp. °C | 149 | 148 | 149 | 149 | 174 |
| Max. Shrinkage % * | 5.3 | 4.8 | 4.9 | 4.5 | 6.5 |

*Maximum Shrinkage in Molten State (% at about 140°C)

**Table 1 Continued**

| PROPERTIES | Comp Ex 1 | Comp Ex 2 | Comp Ex 3 | Comp Ex 4 | Comp Ex 5 | Comp Ex 6 |
|---|---|---|---|---|---|---|
| Thickness µm | 16.0 | 16.3 | 16.0 | 16.3 | 16.2 | 16.8 |
| Air Perm. | 305 | 299 | 78 | 247 | 279 | 345 |
| Porosity % | 37.5 | 37.0 | 55.9 | 38.8 | 36.1 | 38.0 |
| Punct. Strength | 3822 | 3724 | 2127 | 3430 | 3646 | 4116 |
| Tensile Strength MD//TD | 146020 114660 | 147000 112700 | 81340 50960 | 137200 107800 | 141120 110740 | 147000 122500 |
| Tensile Elongation MD//TD | 140 200 | 145 205 | 170 240 | 145 210 | 150 210 | 140 195 |
| Heat Shrinkage 105°C MD//TD | 2.7 1.9 | 2.8 1.8 | 27.6 21.1 | 3.4 2.3 | 3.0 2.1 | 4.2 3.0 |
| Heat Shrinkage 130°C | 21.0 | 20.8 | 34.8 | 25.0 | 25.5 | 24.0 |

| MD//TD | 12.0 | 12.5 | 25.4 | 15.5 | 13.0 | 15.1 |
|---|---|---|---|---|---|---|
| STDEV of air permeability in TD | 20.9 | 20.1 | 2.9 | 21.5 | 22.0 | 21.1 |
| Thick. Var. Aft. Heat Comp. % (Abs. Val.) | 9 | 10 | 12 | 10 | 9 | 8 |
| Air Perm. Aft. Heat Comp. | 681 | 659 | 492 | 590 | 588 | 695 |
| Melt Down Temp. °C | 147 | 148 | 148 | 147 | 147 | 172 |
| Max. Shrinkage % * | 4.6 | 4.4 | 15 | 4.4 | 4.6 | 7.3 |

*Maximum Shrinkage in Molten State (% at about 140°C)

It is noted from Table 1 that the microporous membranes of the present invention exhibit well-balanced properties and high uniformity. The microporous membranes have suitable air permeability, pin puncture strength, tensile rupture strength, tensile rupture elongation and heat shrinkage resistance, as well as excellent uniformity, with little variation of thickness and air permeability after heat compression. On the other hand, the microporous membrane products of the Comparative Examples generally exhibit a large standard deviation of permeability across the membrane in the transverse direction, which is undesirable for a highly uniform product, except for Comparative Example 3, which has an undesirably low pin puncture strength.

Battery separators formed by the microporous polyolefin membranes of the present invention provide batteries with suitable safety, heat resistance, storage properties and productivity.

## Claims

1.   A method for manufacturing a microporous polymeric membrane comprising polyolefin, which method comprises:

   heat-setting the microporous polymeric membrane in at least an upstream stage and a final downstream stage by a tenter method, the temperature of the upstream stage being at least 15°C cooler than the temperature of the final downstream stage.

2.   The method of claim 1, wherein the microporous polymeric membrane comprises polyethylene and wherein the temperature of the first stage is no more than 10°C higher than the polyethylene's crystal dispersion temperature Tcd, measured according to ASTM D4065.

3.   The method of claims 1 or 2, wherein the microporous polymeric membrane has a first size in at least one planar direction before heat setting and a second size after heat setting in the planar direction, the second size being in the range of from 5% to 20% smaller than the first size.

4.   The method of claim 1 which, prior to the staged heat setting step (6) of claim 1, further comprises:

   (1) combining a polyolefin composition and at least one diluent to form a mixture, the polyolefin composition comprising (a) from 50 to 100% of a first polyethylene resin having a weight average molecular weight $Mw < 1 \times 10^6$ and a molecular weight distribution MWD of from 3 to 100, (b) from 0 to 40% of a second polyethylene resin having an $Mw \geq 1 \times 10^6$ and an MWD of from 3 to 100, and (c) from 0 to 50% of a polypropylene resin having an Mw of $5 \times 10^5$ or higher, an MWD of from 1 to 100 and a heat of fusion of 90 J/g or higher, percentages based on the mass of the polyolefin composition,
   (2) extruding the mixture through a die to form an extrudate,
   (3) cooling the extrudate to form a cooled extrudate,
   (4) stretching the cooled extrudate in at least one direction at a stretching temperature of from the crystal dispersion temperature Tcd of the combined polyethylene of the cooled extrudate to the melting point Tm, as determined accordingly to JIS K7121 to form a stretched sheet, and

(5) removing at least a portion of the diluent from the stretched sheet to form a microporous polymeric membrane.

5. The method of claim 4 further comprising at least one of the following steps: a heat-setting treatment step (4i) between steps (4) and (5) wherein the stretched sheet is heat-set at a temperature of the stretching temperature $\pm 5°C$; a heat roll treatment step (4ii) following step (4i) and before step (5) wherein the stretched sheet contacts a heated roller at a temperature in the range of from the polyolefin composition's crystal dispersion temperature Tcd to the polyolefin composition's melting point +10°C; a hot solvent treatment step (4iii) following step (4ii) and before step (5) wherein the stretched sheet is contacted with a hot solvent; a cross-linking step (7) following step (6) wherein the heat-set microporous membrane is cross-linked by ionizing radiation rays selected from one or more of $\alpha$-rays, $\beta$-rays, $\gamma$-rays, and electron beams; a hydrophilizing treatment step (7i) following step (6) wherein the heat-set microporous membrane is made more hydrophilic by one or more of a monomer-grafting treatment, a surfactant treatment, and a corona-discharging treatment; or a surface-coating treatment step (7ii) following step (6) wherein the heat-set microporous membrane is coated with one or more of a porous polypropylene, a porous fluororesin, a porous polyimide, and a porous polyphenylene sulfide.

6. A microporous membrane comprising polyolefin, the membrane having

(a) a machine direction in the plane of the membrane and a thickness direction perpendicular to both the plane of the membrane and the machine direction;
(b) a width W in a transverse direction perpendicular to both the thickness direction and the machine direction, the value of W being determined before membrane slitting;
(c) a plurality of air permeability values in the thickness direction at points along the transverse direction from an initial point to a final point, the standard deviation of the air permeability values being no more than 20 seconds/100 cm$^3$/16 $\mu$m, measured according to JIS P8117,

(i) the initial and final points being equidistant along the transverse direction from a point W /2 and
(ii) the distance between the initial and final points measured along the transverse direction being at least 75% of W; and at least one of

(d) a puncture strength of 3,000mN/16 $\mu$m or more;
(e) a transverse direction TD heat shrinkage ratio at 105°C of 10% or less;
(f) a transverse direction TD heat shrinkage ratio at 130°C of 20% or less; or
(g) a thermal mechanical analysis maximum TMA shrinkage in the molten state at 140°C of 20% or less.

7. The microporous membrane of claim 6, wherein the puncture strength is 3,500mN/16 $\mu$m or more, the transverse direction TD shrinkage ratio at 105°C is 5% or less; the transverse direction TD heat shrinkage ratio at 130°C is 15% or less; or the TMA shrinkage in the molten state at 140°C is 10% or less.

8. The microporous membrane of claims 6 or 7, wherein the polyolefin comprises (a) from 50 to 100% of a first polyethylene having a weight average molecular weight Mw < 1 x 10$^6$ and a molecular weight distribution MWD of from 3 to 100, (b) from 0 to 40% of a second polyethylene having an Mw $\geq$ 1 x 10$^6$ and an MWD of from 3 to 100, and (c) from 0 to 50% of a polypropylene having an Mw of 5 x 10$^5$ or higher, an MWD of from 1 to 100 and a heat of fusion of 90 J/g or higher, percentages being based on the mass of the membrane.

9. The microporous membrane of claim 8, comprising (a) from 50 to 80% of a first polyethylene having a weight average molecular weight Mw of from 2.5 x 10$^5$ to 9 x 10$^5$ and a molecular weight distribution MWD of from 3.5 to 20, (b) from 10 to 30% of a second polyethylene having an Mw of from 1.1 x 10$^6$ to 5 x 10$^6$ and an MWD of from 3.5 to 20, and (c) from 0 to 40% of a polypropylene having an Mw of 8 x 10$^5$ to 1.5 x 10$^6$, an MWD of from 1 to 100, and a heat of fusion of from 100 to 120 J/g, the percentages being based on the mass of the membrane.

10. The microporous membrane of claim 8, wherein the first polyethylene is one or more of ethylene homopolymer or ethylene/$\alpha$-olefin copolymer, the second polyethylene is one or more of ethylene homopolymer or ethylene/$\alpha$-olefin copolymer, and the polypropylene is one or more of propylene homopolymer or propylene/$\alpha$-olefin copolymer.

11. The microporous membrane of claim 8, wherein the membrane further comprises one or more of polybutene-1, polypentene-1, poly-4-methylpentene-1, polyhexene-1, polyoctene- 1, polyvinyl acetate, polymethyl methacrylate, polystyrene, and ethylene/$\alpha$-olefin copolymer.

**12.** The microporous membrane of claim 6 or 7, wherein at least one of (1) the number of points is at least 20 and the standard deviation of the air permeability values is no more than 18 seconds/100 cm$^3$/16 $\mu$m, (2) the distance between the initial and final points measured along the transverse direction is at least 90% of W; or (3) the puncture strength is $\geq$ 3,500 mN/16 $\mu$m.

**13.** The microporous membrane of claim 6 or 7, wherein at least one of (1) the number of points is at least 40 and the standard deviation of the air permeability values is no more than 15 seconds, (2) the distance between the initial and final points measured along the transverse direction is at least 95% of W; or (3) the puncture strength is $\geq$ 4000 mN/16 $\mu$m.

**14.** A battery separator comprising the microporous membrane of claims 6 or 7.

**15.** A battery comprising an electrolyte, an anode, a cathode, and the battery separator of claim 14.

## Patentansprüche

**1.** Verfahren zur Herstellung einer mikroporösen Polymermembran umfassend Polyolefin, wobei das Verfahren Folgendes umfasst:

Thermofixieren der mikroporösen Polymermembran in zumindest einer Stromauf-Phase und einer abschließenden Stromab-Phase mittels eines Spannverfahrens, wobei die Temperatur der Stromauf-Phase zumindest um 15 °C kühler ist als die Temperatur der abschließenden Stromab-Phase.

**2.** Verfahren nach Anspruch 1, wobei die mikroporöse Polymermembran Polyethylen umfasst und wobei die Temperatur der ersten Phase nicht mehr als 10 °C höher ist als die Kristalldispersionstemperatur Tcd des Polyethylens, die gemäß ASTM D4065 gemessen wird.

**3.** Verfahren nach Anspruch 1 oder 2, wobei die mikroporöse Polymermembran eine erste Größe in zumindest einer planaren Richtung vor dem Thermofixieren und eine zweite Größe nach dem Thermofixieren in der planaren Richtung aufweist, wobei die zweite Größe im Bereich von 5 % bis 20 % kleiner als die erste Größe liegt.

**4.** Verfahren nach Anspruch 1, das vor einem phasenweisen Thermofixierungsschritt (6) nach Anspruch 1 weiters Folgendes umfasst:

(1) Vereinen einer Polyolefin-Zusammensetzung und zumindest eines Verdünnungsmittels, um ein Gemisch zu bilden, wobei die Polyolefin-Zusammensetzung (a) von 50 bis 100 % eines ersten Polyethylenharzes mit einem gewichtsmittleren Molekulargewicht Mw < 1 x 10$^6$ und einer Molekulargewichtsverteilung MWD von 3 bis 100, (b) von 0 bis 40 % eines zweiten Polyethylenharzes mit einem Mw $\geq$ 1 x 10$^6$ und einer MWD von 3 bis 100 und (c) von 0 bis 50 % eines Polypropylenharzes mit einem Mw von 5 x 10$^5$ oder mehr, einer MWD von 1 bis 100 und einer Schmelzwärme von 90 J/g oder höher umfasst, wobei sich die Prozentzahlen auf die Masse der Polyolefin-Zusammensetzung beziehen,
(2) Extrudieren des Gemischs durch eine Form, um eine Extrudat zu bilden,
(3) Abkühlen des Extrudats, um ein abgekühltes Extrudat zu bilden,
(4) Recken des abgekühlten Extrudats in zumindest eine Richtung bei einer Recktemperatur von der Kristalldispersionstemperatur Tcd des vereinigten Polyethylens des abgekühlten Extrudats bis zum Schmelzpunkt Tm, wie gemäß JIS K7121 bestimmt, um eine gereckte Platte auszubilden, und
(5) Entfernen zumindest eines Teils des Verdünnungsmittels aus der gereckten Platte, um eine mikroporöse Polymermembran auszubilden.

**5.** Verfahren nach Anspruch 4, das weiters zumindest einen der folgenden Schritte umfasst: einen Thermofixierungsschritt (4i) zwischen Schritten (4) und (5), wobei die gereckte Platte bei einer Temperatur der Recktemperatur $\pm$ 5 °C thermofixiert wird; einen Thermowalzbehandlungsschritt (4ii) nach Schritt (4i) und vor Schritt (5), wobei die gereckte Platte eine Thermowalze bei einer Temperatur im Bereich von der Kristalldispersionstemperatur Tcd der Polyolefin-Zusammensetzung bis zum Schmelzpunkt + 10 °C der Polyolefin-Zusammensetzung kontaktiert; einen Behandlungsschritt mit heißem Lösungsmittel (4iii) nach Schritt (4ii) und vor Schritt (5), wobei die gereckte Platte mit einem heißen Lösungsmittel kontaktiert wird; einen Vernetzungsschritt (7) nach Schritt (6), wobei die thermofixierte mikroporöse Membran durch ionisierende Strahlung vernetzt wird, welche aus einer oder mehreren von α-Strahlen, β-Strahlen, γ-Strahlen und Elektronenstrahlen ausgewählt ist; einen Hydrophilisierungsbehandlungsschritt (7i) nach Schritt (6), wobei die thermofixierte mikroporöse Membran durch eine oder mehrere aus einer Monomer-Pfropf-Behandlung, einer Tensid-Behandlung und einer Korona-Entladungsbehandlung hydrophiler gemacht wird; oder einen Oberflächenbeschichtungsschritt (7ii) nach Schritt (6), wobei die thermofixierte mikroporöse Membran mit einem oder mehreren aus einem porösen Polypropylen, einem porösen Fluorharz, einem porösen Polyimid und einem porösen Polyphenylensulfid beschichtet wird.

6. Mikroporöse Membran umfassend Polyolefin, wobei die Membran Folgendes aufweist:

   (a) eine Maschinenlaufrichtung in der Ebene der Membran und eine Dickenrichtung lotrecht zu der Ebene der Membran sowie zur Maschinenlaufrichtung;
   (b) eine Breite W in einer Querrichtung lotrecht zu der Dickenrichtung sowie zu der Maschinenlaufrichtung, wobei der Wert von W vor dem Schlitzen der Membran bestimmt wird;
   (c) eine Vielzahl von Luftdurchlässigkeitswerten in der Dickenrichtung an Punkten entlang der Querrichtung ausgehend von einem Ausgangspunkt bis zu einem Endpunkt, wobei die Standardabweichung der Luftdurchlässigkeitswerte nicht mehr als 20 s/100cm$^3$/16 μm beträgt, wie gemäß JIS P8117 gemessen,

      (i) wobei der Ausgangs- und der Endpunkt entlang der Querrichtung von einem Punkt W/2 gleich weit entfernt sind und
      (ii) der Abstand zwischen dem Ausgangs- und dem Endpunkt, die entlang der Querrichtung gemessen werden, zumindest 75 % von W beträgt; und zumindest eines aus

   (d) einer Durchstoßfestigkeit von 3000 mN/16 μm oder mehr;
   (e) einem Wärmeschrumpfverhältnis in Querrichtung TD bei 105 °C von 10 % oder weniger;
   (f) einem Wärmeschrumpfverhältnis in Querrichtung TD bei 130 °C von 20 % oder weniger; oder
   (g) einem maximalen TMA-Schrumpfen in einer mechanischen Thermoanaly-se in geschmolzenem Zustand bei 140 °C von 20 % oder weniger.

7. Mikroporöse Membran nach Anspruch 6, wobei die Durchstoßfestigkeit 3500 mN/16 μm oder mehr beträgt, das Schrumpfverhältnis in Querrichtung TD bei 105 °C 5 % oder weniger beträgt; das Wärmeschrumpfverhältnis in Querrichtung TD bei 130 °C 15 % oder weniger beträgt; oder das TMA-Schrumpfen im geschmolzenen Zustand bei 140 °C 10 % oder weniger beträgt.

8. Mikroporöse Membran nach Anspruch 6 oder 7, wobei das Polyolefin (a) von 50 bis 100 % eines ersten Polyethylens mit einem gewichtsmittleren Molekulargewicht Mw < 1 x 10$^6$ und einer Molekulargewichtsverteilung MWD von 3 bis 100, (b) von 0 bis 40 % eines zweiten Polyethylens mit einem Mw ≥ 1x 10$^6$ und einer MWD von 3 bis 100 und (c) von 0 bis 50 % eines Polypropylens mit einem Mw von 5 x 10$^5$ oder mehr, einer MWD von 1 bis 100 und einer Schmelzwärme von 90 J/g oder mehr umfasst, wobei sich die Prozentzahlen auf die Masse der Membran beziehen.

9. Mikroporöse Membran nach Anspruch 8, umfassend (a) von 50 bis 80 % eines ersten Polyethylens mit einem gewichtsmittleren Molekulargewicht Mw von 2,5 x 10$^5$ bis 9 x 10$^5$ und einer Molekulargewichtsverteilung MWD von 3,5 bis 20, (b) von 10 bis 30 % eines zweiten Polyethylens mit einem Mw von 1,1 x 10$^6$ bis 5 x 10$^6$ und einer MWD von 3,5 bis 20 und (c) von 0 bis 40 % eines Polypropylens mit einem Mw von 8 x 10$^5$ bis 1,5 x 10$^6$, einer MWD von 1 bis 100 und einer Schmelzwärme von 100 bis 120 J/g, wobei sich die Prozentzahlen auf die Masse der Membran beziehen.

10. Mikroporöse Membran nach Anspruch 8, wobei das erste Polyethylen eines oder mehrere aus Ethylenhomopolymer oder Ethylen/α-Olefin-Copolymer ist, das zweite Polyethylen eines oder mehrere aus Ethylenhomopolymer oder Ethylen-/α-Olefin-Copolymer ist und das Polypropylen eines oder mehrere aus Propylenhomopolymer oder Propylen/α-Olefin-Copolymer ist.

11. Mikroporöse Membran nach Anspruch 8, wobei die Membran weiters eines oder mehrere aus Polybuten-1, Polypenten-1, Poly-4-methylpenten-1, Polyhexen-1, Polyocten-1, Polyvinylacetat, Polymethylmethacrylat, Polystyrol und Ethylen/a-Olefin-Copolymer umfasst.

12. Mikroporöse Membran nach Anspruch 6 oder 7, wobei zumindest eines aus (1) der Anzahl von Punkten zumindest 20 beträgt und die Standardabweichung der Luftdurchlässigkeitswerte nicht mehr als 18 s/100 cm$^3$/16 μm beträgt, (2) der Abstand zwischen dem Ausgangs- und dem Endpunkt, der entlang der Querrichtung gemessen wird, zumindest 90 % von W beträgt; oder (3) die Durchstoßfestigkeit ≥ 3500 mN/16 μm beträgt.

13. Mikroporöse Membran nach Anspruch 6 oder 7, wobei zumindest eines aus (1) der Anzahl von Punkten zumindest 40 beträgt und die Standardabweichung der Luftdurchlässigkeitswerte nicht mehr als 15 s beträgt, (2) der Abstand zwischen dem Ausgangs- und dem Endpunkt, der entlang der Querrichtung gemessen wird, zumindest 95 % von W beträgt; oder (3) die Durchstoßfestigkeit ≥ 4000 mN/16 μm beträgt.

14. Batterieseparator, umfassend die mikroporöse Membran nach Anspruch 6 oder 7.

15. Batterie, umfassend einen Elektrolyt, eine Anode, eine Kathode und einen Batterieseparator nach Anspruch 14.

**Revendications**

1. Procédé pour fabriquer une membrane polymère microporeuse comprenant une polyoléfine, lequel procédé comprend le thermofixage de la membrane polymère microporeuse dans au moins un étage en amont et un étage en aval final au moyen d'un procédé sur rame, la température de l'étage en amont étant inférieure d'au moins 15°C à la température de l'étage en aval final.

2. Procédé selon la revendication 1, dans lequel la membrane polymère microporeuse comprend du polyéthylène et dans lequel la température du premier étage n'est pas supérieure de plus de 10°C à la température de dispersion cristalline du polyéthylène Tcd, mesurée conformément à la norme ASTM D4065.

3. Procédé selon la revendication 1 ou 2, dans lequel la membrane polymère microporeuse a une première taille dans au moins une direction plane avant le thermofixage et une deuxième taille après le thermofixage dans la direction plane, la deuxième taille étant inférieure de 5 % à 20 % à la première taille.

4. Procédé selon la revendication 1 qui, avant l'étape de thermofixage par étages (6) de la revendication 1, comprend en outre :

   (1) la combinaison d'une composition de polyoléfine et d'au moins un diluant pour former un mélange, la composition de polyoléfine comprenant (a) de 50 à 100 % d'une première résine de polyéthylène ayant une masse moléculaire moyenne en masse Mw < 1 x $10^6$ et une distribution des masses moléculaires MWD de 3 à 100, (b) de 0 à 40 % d'une deuxième résine de polyéthylène ayant une Mw ≥ 1 x $10^6$ et une MWD de 3 à 100, et (c) de 0 à 50 % d'une résine de polypropylène ayant une Mw de 5 x $10^5$ ou plus, une MWD de 1 à 100 et une chaleur de fusion de 90 J/g ou plus, les pourcentages étant basés sur la masse de la composition de polyoléfine,
   (2) l'extrusion du mélange à travers une filière pour former un extrudat,
   (3) le refroidissement de l'extrudat pour former un extrudat refroidi,
   (4) l'étirage de l'extrudat refroidi dans au moins une direction à une température d'étirage allant de la température de dispersion cristalline Tcd du polyéthylène combiné de l'extrudat refroidi au point de tension Tm, tel que déterminé conformément à la norme JIS K7121, pour former une feuille étirée, et
   (5) l'élimination d'au moins une partie du diluant dans la feuille étirée pour former une membrane polymère microporeuse.

5. Procédé selon la revendication 4, comprenant en outre au moins l'une des étapes suivantes : une étape de traitement de thermofixage (4i) entre les étapes (4) et (5), dans laquelle la feuille étirée est thermofixée à une température de l'ordre de la température d'étirage ± 5°C ; une étape de traitement par un rouleau chauffant (4ii) suivant l'étape (4i) et précédant l'étape (5), dans laquelle la feuille étirée vient au contact d'un rouleau chauffé à une température située dans la plage allant de la température de dispersion cristalline Tcd de la composition de polyoléfine au point de fusion de la composition de polyoléfine + 10°C ; une étape de traitement par un solvant chaud (4iii) suivant l'étape (4ii) et précédant l'étape (5), dans laquelle la feuille étirée est mise en contact avec un solvant chaud ; une étape de réticulation (7) suivant l'étape (6), dans laquelle la membrane microporeuse thermofixée est réticulée par des rayonnements ionisants choisis parmi un ou plusieurs des rayons α, rayons β, rayons γ et faisceaux d'électrons ; une étape de traitement d'hydrophilisation (7i) suivant l'étape (6), dans laquelle la membrane microporeuse thermofixée est rendue plus hydrophile par un ou plusieurs parmi un traitement de greffage de monomère, un traitement par un tensioactif, et un traitement par décharge couronne ; ou une étape de traitement de revêtement de surface (7ii) suivant l'étape (6), dans laquelle la membrane microporeuse thermofixée est revêtue d'un ou plusieurs parmi un polypropylène poreux, une résine fluorée poreuse, un polyimide poreux, et un poly(sulfure de phénylène) poreux.

6. Membrane microporeuse comprenant une polyoléfine, la membrane ayant

(a) un sens machine dans le plan de la membrane et un sens de l'épaisseur perpendiculaire à la fois au plan de la membrane et au sens machine ;
(b) une largeur W dans le sens travers perpendiculaire à la fois au sens de l'épaisseur et au sens machine, la valeur de W étant déterminée avant refendage de la membrane ;
(c) une pluralité de valeurs de perméabilité à l'air dans le sens de l'épaisseur en des points le long du sens travers allant d'un point initial à un point final, l'écart type des valeurs de perméabilité à l'air n'étant pas supérieur à 20 secondes/100 cm$^3$/16 $\mu$m, mesuré conformément à la norme JIS P8117,

(i) les points initial et final étant équidistants le long du sens travers à partir d'un point W/2 et
(ii) la distance entre les points initial et final, mesurée le long du sens travers, étant d'au moins 75 % de W ; et au moins l'un parmi

(d) une résistance à la perforation de 3000 mN/16 $\mu$m ou plus ;
(e) un taux de retrait à la chaleur dans le sens travers TD à 105°C de 10 % ou moins ;
(f) un taux de retrait à la chaleur dans le sens travers TD à 130°C de 20 % ou moins ; ou
(g) un retrait maximal par analyse thermomécanique TMA à l'état fondu à 140°C de 20 % ou moins.

7. Membrane microporeuse selon la revendication 6, dans laquelle la résistance à la perforation est de 3500 mN/16 $\mu$m ou plus, le taux de retrait dans le sens travers TD à 105°C est de 5 % ou moins ; le taux de retrait à la chaleur dans le sens travers TD à 130°C est de 15 % ou moins ; ou le retrait TMA à l'état fondu à 140°C est de 10 % ou moins.

8. Membrane microporeuse selon la revendication 6 ou 7, dans laquelle la polyoléfine comprend (a) de 50 à 100 % d'un premier polyéthylène ayant une masse moléculaire moyenne en masse Mw < 1 x 10$^6$ et une distribution des masses moléculaires MWD de 3 à 100, (b) de 0 à 40 % d'un deuxième polyéthylène ayant une Mw $\geq$ 1 x 10$^6$ et une MWD de 3 à 100, et (c) de 0 à 50 % d' un polypropylène ayant une Mw de 5 x 10$^5$ ou plus, une MWD de 1 à 100 et une chaleur de fusion de 90 J/g ou plus, les pourcentages étant basés sur la masse de la membrane.

9. Membrane microporeuse selon la revendication 8, comprenant (a) de 50 à 80 % d'un premier polyéthylène ayant une masse moléculaire moyenne en masse Mw de 2,5 x 10$^5$ à 9 x 10$^5$ et une distribution des masses moléculaires MWD de 3,5 à 20, (b) de 10 à 30 % d'un deuxième polyéthylène ayant une Mw de 1,1 x 10$^6$ à 5 x 10$^6$ et une MWD de 3,5 à 20, et (c) de 0 à 40 % d'un polypropylène ayant une Mw de 8 x 10$^5$ à 1,5 x 10$^6$, une MWD de 1 à 100, et une chaleur de fusion de 100 à 120 J/g, les pourcentages étant basés sur la masse de la membrane.

10. Membrane microporeuse selon la revendication 8, dans laquelle le premier polyéthylène est un ou plusieurs parmi un homopolymère d'éthylène et un copolymère d'éthylène/$\alpha$-oléfine, le deuxième polyéthylène est un ou plusieurs parmi un homopolymère d'éthylène et un copolymère d'éthylène/$\alpha$-oléfine, et le polypropylène est un ou plusieurs parmi un homopolymère de propylène et un copolymère de propylène/$\alpha$-oléfine.

11. Membrane microporeuse selon la revendication 8, laquelle membrane comprend en outre un ou plusieurs parmi le polybutène-1, le polypentène-1, le poly-4-méthylpentène-1, le polyhexène-1, le polyoctène-1, le poly(acétate de vinyle), le poly(méthacrylate de méthyle), le polystyrène, et un copolymère d'éthylène/$\alpha$-oléfine.

12. Membrane microporeuse selon la revendication 6 ou 7, satisfaisant à au moins l'un parmi : (1) le nombre de points est d'au moins 20 et l'écart type des valeurs de perméabilité à l'air n'est pas supérieur à 18 secondes/ 100 cm$^3$/16 $\mu$m, (2) la distance entre les points initial et final mesurée le long du sens travers est d'au moins 90 % de W ; et (3) la résistance à la perforation est $\geq$ 3500 mN/16 $\mu$m.

13. Membrane microporeuse selon la revendication 6 ou 7, satisfaisant à au moins l'un parmi : (1) le nombre de points est d'au moins 40 et l'écart type des valeurs de perméabilité à l'air n'est pas supérieur à 15 secondes, (2) la distance entre les points initial et final mesurée le long du sens travers est d'au moins 95 % de W ; et (3) la résistance à la perforation est $\geq$ 4000 mN/16 $\mu$m.

14. Séparateur de batterie comprenant la membrane microporeuse de la revendication 6 ou 7.

**15.** Batterie comprenant un électrolyte, une anode, une cathode, et le séparateur de batterie de la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6240036 A
- WO 199948959 A
- WO 200020492 A
- WO 2002072248 A
- WO 2005113657 A
- GB 2298817 A
- GB 2070847 A
- US 3801404 A
- US 3839516 A
- WO 2008016174 A
- JP 2003003006 A
- US 5051183 A
- US 6096213 A
- JP 3347854 B
- WO 2007117042 A
- WO 200020493 A

**Non-patent literature cited in the description**

- *Macromolecules,* 2001, vol. 34 (19), 6812-6820